# EUROPÄISCHE PATENTSCHRIFT

(11) **EP 1 511 402 B1**
(45) Veröffentlichungstag und Bekanntmachung des Hinweises auf die Patenterteilung: **28.11.2007**
(21) Anmeldenummer: 03735450.3
(22) Anmeldetag: 23.05.2003
(51) Int. Cl.: A41H 3/00, G06F 17/50

(54) **VERFAHREN ZUM HERSTELLEN VON BEDRUCKTEN BEKLEIDUNGSST CKEN A US STOFF**
METHOD FOR THE PRODUCTION OF PRINTED ITEMS OF CLOTHING MADE FROM TEXTILE MATERIAL
PROCEDE POUR PRODUIRE DES VETEMENTS IMPRIMES EN TISSU

(30) Priorität: 25.05.2002 DE 10223375
(43) Veröffentlichungstag der Anmeldung: 09.03.2005
(73) Patentinhaber: Owayo GmbH, 93059 Regensburg (DE)
(72) Erfinder: SCHINDLER, Bastian, 93047 Regensburg (DE); SANCHEZ, Francisco, Jose, Gennes, 93059 Regensburg (DE); MAREK, Paul, 93051 Regensburg (DE)
(74) Vertreter: Klunker . Schmitt-Nilson . Hirsch
(86) Internationale Anmeldenummer: PCT/EP2003/005426
(87) Internationale Veröffentlichungsnummer: WO 2003/099052

(56) Entgegenhaltungen:
- EP-A- 0 732 674
- WO-A-01/26006
- WO-A-01/27818
- WO-A-01/53976
- WO-A-02/35952
- US-B1- 6 243 110
- US-B1- 6 353 770

## Beschreibung

Erster Gegenstand der Erfindung ist ein Verfahren zum Herstellen eines Satzes von Druckbildern für ein Weiterverarbeiten zu einem Satz von bedruckten Stoffteilen für ein Bekleidungsstück aus zusammengenähten Stoffteilen, aufweisend folgende Schritte:
(a) Ein Computer eines Herstellers wird für Datenverkehr verbunden mit einem Computer eines Kunden;
(b) der Kunde legt die Ausführung des gewünschten Bekleidungsstücks über die Herstellercomputer -Kundencomputer -Verbindung fest, indem er bei mehreren Ausführungsparametern - z.B. Grunddesign, Farbe, Größe - jeweils ein Auswahlziel von mehreren möglichen Auswahlzielen festlegt;
(c) auf Grund von Daten aus der genannten Ausführungsfestlegung wird mittels eines Druckers der Satz von Druckbildern auf einem Bedruckungsmedium gedruckt, wobei das Bedruckungsmedium entweder direkt eine Stofffläche ist oder ein Zwischenmedium ist, dessen Bedruckung später auf Stoff übertragen werden kann,
(d) wobei zu dem Satz von Druckbildern Druckbilder mit unterschiedlichen Abmessungen gehören und wobei die Druckbilder jeweils, mit oder ohne Nahtzugabe, die Abmessungen eines bedruckten Stoffteils für das Zusammennähen zu dem Bekleidungsstück haben.

Durch US 6 243 110 B ist ein Verfahren Stand der Technik, bei dem ein Designer ein Stoffbedruckungsmuster entwirft und dieses Bedruckungsmuster über ein LAN (Local Area Network) auf einen Tintenstrahldrucker gegeben wird. Der Drucker druckt das Bedruckungsmuster und die Kontur auszuschneidender Stoffteile auf eine Stoffbahn oder eine Papierbahn als Zwischenmedium.

Statt des Wortes "Druckbild" wird in der nachfolgenden Beschreibung vielfach das Wort "Druckteil" benutzt. Das Wort "Druckbild" soll nicht die beschränkende Bedeutung haben, dass eine bedruckte Fläche mit bildhaftem Inhalt erzeugt wird.

Mittels des erfindungsgemäßen Verfahrens kann der Hersteller seinem Kunden eine besonders bequeme Auswahl der Bekleidungsstück-Ausführung unter vielen Möglichkeiten anbieten und kann wegen des reduzierten Einsatzes menschlicher Tätigkeit äußerst rationell produzieren, und zwar auch kleinste Bestellmengen. Im unteren Grenzfall kann der betreffende Kunde ein einziges Bekleidungsstück in ganz individueller Ausführung auswählen, und dieses Bekleidungsstück lässt sich wegen der äußerst rationellen Herstellung zu einem akzeptablen Preis Gewinn bringend produzieren. Selbstverständlich sind größere Herstellmengen in identischer oder zum Teil identischer Bekleidungsstück-Ausführung kein Problem. Die optimierten und verkürzten Abläufe beim Auswählen und beim Produktionsprozess führen zu einer äußerst kurzen Ablaufzeit; zwischen Bestellung und Auslieferung z.B. per Post liegen in der Regel nur einige Tage.

Bisher hat man bei der fabrikmäßigen Herstellung von bedruckten Bekleidungsstücken Siebdruck oder Offsetdruck eingesetzt. Der klassische Siebdruck für kleinere Serien ist Handarbeit, mit negativen Auswirkungen auf Geschwindigkeit, Fehlerhäufigkeit, Anlaufkosten pro Auftrag. Bei großen Serien kann man mit einer Siebdruckstraße arbeiten, die jedoch sehr hohe Investitionskosten erfordert. Offsetdruck ist nur einsetzbar, wenn die Motivlänge, gemessen in Längsrichtung der Stoffbahn, nicht allzu groß ist.

Bei der Erfindung wird der Drucker auf Grund von Daten aus der Ausführungsfestlegung gesteuert. Dies stellt eine neuartige Zusammenführung des Vorgangs der Auswahl der Ausführung des Bekleidungsstücks und des Kemvorgangs der Herstellung des Bekleidungsstücks dar.

Besonders bevorzugt ist die Erfindung zum Herstellen von bedruckten Sportbekleidungsstücken aus Stoff vorgesehen, d. h. insbesondere Bekleidungsstücken, die bei der Ausübung von Sport oder in weiterem Zusammenhang mit sportlichen Aktivitäten (z. B. aufwärmender Trainingsanzug vor dem Hochspringen) getragen werden. Beispiele für Bekleidungsstücke, die nicht Sportbekleidungsstücke sind, sind: Krawatten, Damenblusen, Damenkleider.

Die Verbindung für Datenverkehr zwischen dem Kundencomputer und dem Herstellercomputer ist vorzugsweise eine On-line-Verbindung über das Internet. Der Begriff "Herstellercomputer" umfasst auch einen oder mehrere Untercomputer, die möglicherweise körperlich von dem eigentlichen, die Auswahl ermöglichenden Herstellercomputer separiert, aber für Datenverkehr mit diesem verbunden sind.

Die weitere Beschreibung wird noch verdeutlichend vor Augen führen, dass der Begriff "Auswahlziel" bei der Erfindung sehr umfassend zu verstehen ist. Es kann sich um eine konkrete Reihe von Auswahlzielen (bei dem betreffenden Ausführungsparameter) handeln, z.B. hundert Farben, unter denen der Kunde wählen kann. Bei anderen Ausführungsparametern kann der Begriff "Auswahlziel" aber auch bedeuten, dass der Kunde die Festlegung nicht durch eine Auswahl aus einer konkreten Mehrzahl von Auswahlzielen trifft, sondern durch andersartige Eingabe in den Computer. Ein typisches Beispiel sind die Nummern der Spieler eines Teams, die auf Trikots aufgedruckt sein sollen. Statt im Computer Spielernummern von z.B. 1 bis 30 gespeichert zu haben, aus denen der Kunde konkret auswählt, kann man vorsehen, dass der Kunde die gewünschte Spielernummer oder die gewünschten Spielernummern in einer Eingabenmaske einschreibt. Noch deutlicher wird diese Art der "Auswahlzielfestlegung" bei dem Wunsch, den Namen eines Sportvereins, z.B. AC MILANO, aufzudrucken. In derartigen Fällen ist das Einschreiben in eine Eingabemaske durch den Kunden das praktischste Vorgehen. Bei denjenigen Auswahlzielen, bei denen der Kunde unter konkret vorgegebenen Möglichkeiten auswählt, ist es in der Regel am günstigsten, im Herstellercomputer (oder an einem anderen Speicherungsort, der mit dem Herstellercomputer für Datenverkehr verbunden ist) diejenigen Auswahlziele zu speichern, unter denen der Kunde auswählen kann.

Bevorzugt eingesetzte Drucker erzeugen das Druckbild aus einer großen Anzahl von dicht an dicht befindlichen Druckbildpunkten. Eine zur Zeit besonders gängige und bei der Erfindung bevorzugte Art von Druckern ist die nach dem Tintenstrahlprinzip arbeitende. Insbesondere bei Tintenstrahldruckern bedeutet "Steuern des Druckers zum Drucken von Druckteilen" letztlich, dass für jeden Druckpunkt, den der Drucker druckt, ein Befehl gegeben werden muss, ob auf diesen Punkt Farbe gedruckt werden soll oder nicht, und außerdem der Befehl gegeben werden muss, ggf. mit welcher Farbe dort ein Punkt gedruckt werden soll. Bei der Erfindung kann man aber auch jede Art von Drucker einsetzen, der auf der Grundlage von Daten aus der Auswahlzielfestlegung hinsichtlich der zu erzeugenden Druckbilder gesteuert werden kann.

Das Bedruckungsmedium, auf das der Drucker arbeitet, kann direkt eine Stofffläche sein.

In vielen Fällen ist es allerdings günstiger, die Druckteile zunächst auf ein Zwischenmedium, insbesondere imprägniertes Papier, zu drucken. Danach kann vorzugsweise durch Sublimation (flächiges aufeinander Platzieren, Aufbringen von erhöhter Temperatur und von Anpressdruck, in der Praxis z.B. eine von innen her beheizte, rotierbare Walze oder eine beheizte Plattenpresse), die Bedruckung auf Stoff übertragen werden. In der Regel wird mit Bedruckungsübertragung auf Polyester-Stoff gearbeitet, weil die Druckfarben bei der Sublimation perfekt chemisch mit Polyester reagieren.

Bevorzugte Ausführungen des erfindungsgemäßen Verfahrens sind in den abhängigen Ansprüchen 2 bis 15 angegeben.

Hinsichtlich des Ausschneidens der Stoffteile kann man zum einen aus der Stofffläche ausschneiden, die aus direkter Bedruckung stammt. Wenn man mit Bedruckungsübertragung von dem Zwischenmedium auf Stoff arbeitet, gibt es zwei Möglichkeiten: Man kann nach der Bedruckungsübertragung die Stoffteile aus der Stofffläche ausschneiden. Alternativ kann man aus einer zunächst noch unbedruckten Stofffläche ausschneiden und erst danach die ausgeschnittenen Stoffteile der Bedruckungsübertragung unterwerfen. Das letztgenannte Vorgehen ist besonders günstig, wenn man eine vergleichsweise große Anzahl von Stoffteilen gleicher Konfektionsgröße herstellen will; in diesem Fall kann man z.B. mit einem Viellagencutter gleichzeitig eine größere Anzahl von Stoffteilen ausschneiden. Bedruckungsübertragung erfolgt dann am besten in der Flachpresse statt in der Rotationspresse. Die Daten für das Ausschneiden können entweder aus der Ausführungsfestlegung stammen oder aus separater Quelle, z.B. Schnitte für die erforderlichen Konfektionsgrößen.

Das Ausschneiden der Stoffteile kann von Hand geschehen. Alternativ kommt ein automatisierter Einzellagencutter oder, bei einer größeren Anzahl von mindestens in einem Teil der Auswahlzielfestlegungen identischen Bekleidungsstücken, ein automatisierter Mehrlagencutter in Betracht. Die automatisierten Cutter können vorzugsweise auf Grund von Daten aus der beschriebenen Festlegung der Bekleidungsstück-Ausführung gesteuert werden. Eine alternative Möglichkeit ist die optische Steuerung auf Grund des Umrisses des Druckbildes auf dem Stoff. Die Cutter können mit rotierendem Messer oder mit Laserstrahl arbeiten.

Da die ausgeschnittenen Stoffteile danach zu dem Bekleidungsstück zusammengenäht werden müssen, müssen die Stoffteile mit Nahtzugabe zu dem im fertigen Bekleidungsstück sichtbaren Stoffteil ausgeschnitten werden. Es gibt zum einen die Möglichkeit, den Rand der Bedruckung für das jeweilige Stoffteil als Ausschneidelinie zu benutzen; in diesem Fall muss das jeweilige Stoffteil um die Nahtzugabe "zu groß" gedruckt werden. Es gibt zum anderen die Möglichkeit, als Ausschneidelinie eine Linie in parallelem Abstand zum Rand des Druckbildes zu nehmen und beim Zusammennähen der Stoffteile den Rand der Bedruckung als "Arbeitslinie" zum Zusammennähen zu benutzen (in der Praxis soll die Naht knapp neben dem Rand der Bedruckung liegen, damit beim fertigen Bekleidungsstück keine unbedruckten Stoffbereiche sichtbar sind).

Das Zusammennähen mehrerer Stoffteile zu dem Bekleidungsstück kann mit einer Nähmaschine erfolgen, bei der die Bedienungsperson durch die Zuführung von Stoffteilen die Lage der Naht bestimmt. Alternativ ist es möglich, eine teilautomatisierte oder vollautomatisierte Nähmaschine einzusetzen, welche die zusammen zu nähenden Stoffteile selbsttätig der Nähstelle zuführt.

Die Kernelemente (1) Herstellercomputer, (2) Drucker, (3) ggf. Bedruckungsübertragungsstation, (4) Ausschneidestation, (5) Nähstation können in räumlicher Nachbarschaft zueinander positioniert sein. Es ist aber auch möglich, räumliche Entfernungen zwischen einzelnen oder mehreren dieser Kernelemente zu haben. So ist es z.B. möglich, den Herstellercomputer für Datenverkehr mit dem Drucker zu verbinden oder sogar die Daten auf einem Datenträger zu dem Drucker zu transportieren. Die Übergabe des Bedruckungsmediums von dem Drucker zu der Sublimationspresse kann automatisiert sein oder von Hand erfolgen; es kann sogar ein Transportweg dazwischen sein. Das Gleiche gilt für die Übergabe von der Sublimationspresse zu der Ausschneidestation. Analoges gilt ferner für die Übergabe von der Ausschneidestation zu der Nähstation. Zwischen einzelnen oder allen der Kernelemente können Zwischenspeicher vorhanden sein, müssen aber nicht.

Weiterer Gegenstand der Erfindung ist ein Bekleidungsstück, hergestellt nach dem zuvor beschriebenen Verfahren.

Weiterer Gegenstand der Erfindung sind Stoffteile für ein Bekleidungsstück, hergestellt nach dem soeben beschriebenen Verfahren.

Vorzugsweise werden bei mindestens einem der Ausführungsparameter dem Kunden auf einer Anzeigeeinrichtung die möglichen Auswahlziele grafisch dargestellt. Der Kunde kann dann z. B. durch Anklicken eine Auswahlzielfestlegung (hinsichtlich dieses konkreten Ausführungsparameters) treffen. Vorstehend ist bereits angedeutet worden, dass es bei manchen Arten von Auswahlzielen praktischer sein kann, die Auswahlzielfestlegung auf andere Art vorzunehmen.

Vorzugsweise wird mindestens bei einem Teil der Auswahlzielfestlegungen dem Kunden auf einer Anzeigeeinrichtung grafisch dargestellt, wie das Bekleidungsstück aussieht, wenn es mit einer bestimmten Auswahlzielfestlegung ausgeführt wird. Hierbei muß es sich nicht um eine naturgetreue Darstellung des Bekleidungsstücks handeln. Eine mehr oder weniger starke Schematisierung der Darstellung des Bekleidungsstücks erfüllt auch ihren Zweck. Für den Kunden kommt es in erster Linie auf den optischen Eindruck bei Kombinationen bestimmter Auswahlzielfestlegungen bei mehreren Ausführungsparametern an. Typisches Beispiel: Wie sieht bei dem Grunddesign "Längsstreifen auf der Brust und Sterne auf dem Rücken" die Farbkombination rot/schwarz für die Längsstreifen und schwarzer Grund mit weißen Sternen auf der Rückseite aus?

Vorzugsweise ist eine Funktion vorgesehen, bei welcher der Kunde zunächst eine vorläufige Auswahlzielfestlegung treffen kann, sich das Ergebnis dieser vorläufigen Auswahlzielfestlegung auf der Anzeigeeinrichtung ansehen kann, und danach entweder diese Auswahlzielfestlegung endgültig machen oder zu einer alternativen Auswahlzielfestlegung gehen kann.

Vorzugsweise gehört zu den Ausführungsparametern, bei welchen ausgewählt werden kann, mindestens einer aus der folgenden Gruppe:
Grunddesign (z.B. Längsstreifen, Brustquerstreifen, bogenförmige Farbflächengrenze);
Armlänge/Beinlänge/Gesamtlänge;
Schnitt (z. B. tailliert, männlich, weiblich);
Halsausschnittform (z.B. größerer Ausschnitt, kleinerer Ausschnitt, spitzer Ausschnitt, runder Ausschnitt);
Kragenart (z.B. umgelegter Kragen oder nur andere Stoffart als bei dem angrenzenden Stoffabschnitt);
Bündchen ja/nein;
Farbe;
mehrere unterschiedliche Farben (z.B. für die Streifen, für Brust/Rücken, für die Schriftobjekte);
Schriftobjekt (z.B. Vereinsname, Spielername, Spielernummer);
Plazierung des Schriftobjekts
Schriftart des Schriftobjekts;
Logo (z.B. Vereinslogo, Sponsorlogo);
Platzierung des Logos;
Größe des Bekleidungsstücks (z.B. S für Small, M für Medium, L für Large, XL);
Stoffqualität.

Vorzugsweise gehören zu den Ausführungsparametern mindestens die Folgenden:
Grunddesign;
mehrere unterschiedliche Farben;
Größe des Bekleidungsstücks.

Vorzugsweise wird dem Kunden die Möglichkeit geboten, bei den Schriftobjekten und dem Logo Einfluss auf die Größe des Eindruckens zu nehmen. Insbesondere bei dem Logo wird dem Kunden vorzugsweise die Möglichkeit geboten, das gewünschte Logo (welches sich der Kunde selbst z.B. über das Internet in seinen Kundencomputer heruntergeladen hat) über die Kundencomputer-Herstellercomputer-Verbindung dem Herstellercomputer elektronisch zu überspielen.

Die erfindungsgemäßen Verfahren sind dafür geeignet, dass ein bestimmter Kunde X ein einziges konkretes Bekleidungsstück mit den von ihm vorgenommenen Auswahlzielfestlegungen herstellen lässt (analog andere Kunden Y, Z, ...). Naturgemäß kann der Kunde X (z. B. ein Großhändler) auch 50 identische Bekleidungsstücke bestellen. Eine besonders interessante Möglichkeit ist jedoch die Situation, dass der Kunde X (z. B. ein Sportverein) z. B. 100 Bekleidungsstücke bestellt, die bei einem Teil der Ausführungsparameter identische Auswahlzielfestlegung haben (z. B. Grunddesign, Ausschnittform, Kragenvariante, Farben), aber bei einem anderen Teil der Ausführungsparameter zumindest teilweise ungleiche Auswahlzielfestlegungen haben (z. B. 10 Bekleidungsstücke Größe S mit den Spielernummern 2, 5, 6, 8, 12, 13, 15, 16, 19, 22).

Im Hinblick auf derartige Situationen ist es bevorzugt, dass bei einem Teil der Ausführungsparameter die Auswahlzielfestlegung für eine ganze Anzahl von Bekleidungsstücken gleich vorgenommen wird und dass bei einem anderen Teil der Ausführungsparameter die Auswahlzielfestlegung für die Anzahl von Bekleidungsstücken nicht gleich vorgenommen wird.

Die erfindungsgemäßen Verfahren eignen sich hervorragend dafür, nicht nur die geschilderte Festlegung der Bekleidungsstück-Ausführung über die Kundencomputer-Herstellercomputer-Verbindung durchzuführen, sondern auch das eigentliche Bestellen des Kunden bei dem Hersteller und/oder die Vereinbarung der Bezahlung des Bekleidungsstücks oder der Bekleidungsstücke. Bei der Vereinbarung der Bezahlung kann es z.B. darum gehen, dass der Kunde per Nachnahme bezahlt oder dass er einen Scheck/Überweisung in angezeigter Höhe durchführt oder dass er eine Abbuchungsermächtigung gibt oder dass er eine Bezahlung per Kreditkarte mit einer bestimmten Nummer vereinbart oder dass nach einem anderen Bezahlungsmodus des elektronischen Handels gezahlt wird.

Vorzugsweise wird dem Kunden seine Gesamt-Auswahlzielfestlegung übermittelt, damit er in Bestätigung dieser Auswahlzielfestlegung bestellen kann. Die Übermittlung kann per e-mail oder per Fax oder per Post erfolgen. Mindestens ein Teil der Auswahlzielfestlegungen kann mit Charakterisierung durch Worte erfolgen (z. B. weiblich, großer runder Halsausschnitt, ...). Vorzugsweise wird auch eine mehr oder weniger stark schematisierte, graphische Wiedergabe des zu bestellenden Bekleidungsstücks übermittelt. Diese graphische Wiedergabe muß nicht alle Auswahlzielfestlegungen enthalten, sollte aber die besonders ins Auge fallenden Auswahlzielfestlegungen, wie z. B. Farbfestlegungen, enthalten.

Zweiter Gegenstand der Erfindung ist eine Produktionseinrichtung zum Herstellen eines Satzes von Druckbildern für ein Weiterverarbeiten zu einem Satz von bedruckten Stoffteilen für ein Bekleidungsstück aus zusammengenähten Stoffteilen, wobei die Produktionseinrichtung aufweist:
(a) einen Computer eines Herstellers, der bei einer Ausführungsfestlegung für das gewünschte Bekleidungsstück mit einem Computer eines Kunden für Datenverkehr verbunden ist,
(b) wobei der Herstellercomputer die Fähigkeit hat, dass der Kunde die Ausführung des gewünschten Bekleidungsstücks über die Herstellercomputer -Kundencomputer -Verbindung festlegen kann, indem er bei mehreren Ausführungsparametern - z. B. Grunddesign, Farbe, Größe - jeweils ein Auswahlziel von mehreren möglichen Auswahlzielen festlegt;
(c) und einen Drucker zum Drucken eines Satzes von Druckbildern auf einem Bedruckungsmedium, wobei das Bedruckungsmedium entweder direkt eine Stofffläche ist oder ein Zwischenmedium ist, dessen Bedruckung später auf Stoff übertragen werden kann,
(d) wobei der Drucker beim Betrieb auf Grund von Daten aus der genannten Ausführungsfestlegung derart elektronisch gesteuert werden kann, dass er einen Satz von Druckbildern druckt, zu dem Druckbilder mit unterschiedlichen Abmessungen gehören, wobei die Druckbilder jeweils, mit oder ohne Nahtzugabe, die Abmessungen eines bedruckten Stoffteils für das Zusammennähen zu dem Bekleidungsstück haben.

Wie unmittelbar ersichtlich ist, werden mit dieser Produktionseinrichtung Herstellungsschritte durchgeführt, wie sie weiter vorn im Zusammenhang mit erfindungsgemäßen Verfahren beschrieben worden sind. Es wird betont, dass alle in der vorliegende Anmeldung beschriebenen Vorzugsmerkmale der erfindungsgemäßen Verfahren auch - in ihrer körperlichen Ausprägung - Vorzugsmerkmale der erfindungsgemäßen Produktionseinrichtung sind.

Dritter Gegenstand der Erfindung ist ein Datenverarbeitungsprogramm, das einsetzbar ist beim Herstellen eines Satzes von Druckbildern für ein Weiterverarbeiten zu einem Satz von bedruckten Stoffteilen für ein Bekleidungsstück aus zusammengenähten Stoffteilen, wobei das in Funktion befindliche Datenverarbeitungsprogramm sich auswirkt auf den Datenverkehr zwischen einem Computer eines Herstellers und einem für Datenverkehr mit dem Herstellercomputer verbundenen Computer eines Kunden und auf die Steuerung eines Druckers, wobei das Datenverarbeitungsprogramm aufweist:
(a) einen ersten Programmteil, der es dem Kunden ermöglicht, die Ausführung des gewünschten Bekleidungsstücks über die Herstellercomputer -Kundencomputer -Verbindung festzulegen, indem er bei mehreren Ausführungsparametern - z. B. Grunddesign, Farbei, Größe - jeweils ein Auswahlziel von mehreren möglichen Auswahlzielen festlegt, wobei der erste Programmteil die Funktion aufweist, unter Berücksichtigung des Festlegungsbefehle einen Datensatz zusammenzustellen, der für die gewünschte Ausführung des Bekleidungsstücks repräsentativ ist;
(b) und einen zweiten Programmteil, der die Funktion aufweist, unter Nutzung des genannten Datensatzes eine Grafikdatei zu generieren, die als Grundlage für das Drucken des Satzes von Druckbildern auf einem Bedruckungsmedium einsetzbar ist, wobei das Bedruckungsmedium entweder direkt eine Stofffläche ist oder ein Zwischenmedium ist, dessen Bedruckung später auf Stoff übertragen wird.
(c) wobei zu dem Satz von Druckbildern Druckbilder mit unterschiedlichen Abmessungen gehören und wobei die Druckbilder jeweils, mit oder ohne Nahtzugabe, die Abmessungen eines bedruckten Stoffteils für das Zusammennähen zu dem Bekleidungsstück haben.

Vorzugsweise weist der erste Programmteil als Funktion auf, mindestens bei einem Ausführungsparameter die Festlegung eines Auswahlziels mit Hilfe einer grafischen Darstellung mehrerer möglicher Auswahlziele auf der Anzeigeeinrichtung zu ermöglichen.

Vorzugsweise weist der erste Programmteil als Funktion auf, ein Bekleidungsstück auf der Anzeigeeinrichtung grafisch darzustellen und, mindestens bei einem Teil der Ausführungsparameter, die grafische Darstellung nach Maßgabe der Festlegungsbefehle zu ändern. Das Bekleidungsstück kann, wie weiter vorn schon angesprochen, mehr oder weniger stark schematisiert dargestellt werden. Man muß nicht unbedingt das gesamte Bekleidungsstück darstellen, sondern kann auch nur einen Teil des Bekleidungsstücks darstellen.

Vorzugsweise weist der erste Programmteil als Funktion auf, dass der Programmbenutzer eine getroffene Auswahlzielfestlegung ändern kann. Besonders benutzerfreundlich ist dies, wenn eine zunächst getroffene, vorläufige Auswahlzielfestlegung bei der grafischen Darstellung des Bekleidungsstücks umgesetzt wird und wenn der Programmbenutzer dann die alternativen Möglichkeiten der Bestätigung oder der neuen Auswahlzielfestlegung bei dem gleichen Ausführungsparameter hat.

Vorzugsweise gehört bei dem Datenverarbeitungsprogramm zu den Ausführungsparametern, bei denen ausgewählt werden kann, mindestens einer aus derjenigen Gruppe, die weiter vorn im Zusammenhang mit dem Verfahren aufgelistet worden ist, besonders bevorzugt die Gruppe von drei Ausführungsparametern, die weiter vorn im Zusammenhang mit dem Verfahren angegeben worden ist.

Vorzugsweise weist der erste Programmteil zur Herstellung einer zusammengehörigen Anzahl von Bekleidungsstücken folgenden Funktionen auf:
- es existiert mindestens ein Ausführungsparameter erster Art mit für die ganze Anzahl von Bekleidungsstücken gleicher Auswahlzielfestlegung, bezeichnet als Anzahlparameter;
- es existiert mindestens ein Ausführungsparameter zweiter Art mit bei der Anzahl von Bekleidungsstücken ungleich festlegbarer Auswahlzielfestlegung, bezeichnet als Exemplarparameter;
- die Auswahlzielfestlegung bei dem mindestens einen Anzahlparameter und die jeweilige Auswahlzielfestlegung bei dem mindestens einen Exemplarparameter erfolgen nach einander;
- und unter Zusammenführung der mindestens einen Anzahlparameter-Auswahlzielfestlegung und mindestens einer Exemplarparameter-Auswahlzielfestlegung wird für jedes Bekleidungsstück der Anzahl von Bekleidungsstücken der jeweilige Datensatz zusammengestellt.

Diese Vorzugsausgestaltung macht Herstellungen von einer Anzahl von Bekleidungsstücken unkompliziert, bei der ein Teil der Ausführungsparameter für die ganze Anzahl gleich ist, ein anderer Teil der Ausführungsparameter jedoch nicht, wie an Hand eines ausführlicheren Beispiels weiter vorn geschildert. Es wird betont, dass man den oder die Anzahlparameter zuerst mit Auswahlzielfestlegung bearbeiten und den oder die Exemplarparameter danach durch Auswahlzielfestlegung bearbeiten kann; man kann diese Reihenfolge aber auch umkehren.

Vorzugsweise arbeitet der zweite Programmteil mit einem Datenspeicher zusammen, in dem für die Druckteile des herzustellenden Bekleidungsstücks jeweils mehrere Ausgangs-Grafikdateien gespeichert sind, und zwar mindestens hinsichtlich eines Ausführungsparameters Ausgangs-Grafikdateien für alle Auswahlziele; und dass der zweite Programmteil als Funktion aufweist, nach Maßgabe des Datensatzes eine Ausgangs-Grafikdatei herauszugreifen und hinsichtlich der Auswahlzielfestlegung anderer Ausführungsparameter zu modifizieren.

Besonders günstig ist es, insbesondere die Grunddesigns von Haus aus in dem Datenspeicher zu haben. Man kann aber auch schon Kombinationen mehrerer Ausführungsparameter in dem Datenspeicher haben, vorzugsweise alle Grunddesigns in jeder Größe. Der gewählte Begriff "modifizieren" bedeutet in den meisten Fällen, dass die aus dem Datenspeicher herausgegriffene Datei nach Maßgabe des Datensatzes ergänzt wird, z.B. um einen bestimmten Kragen, einen bestimmten Vereinsnamen oder eine Auswahlzielfestlegung hinsichtlich Stoffqualität. In vielen Fällen wird dies zugleich ein Abändern der Datei bedeuten, weil z. B. dort, wo jetzt ein Vereinsname in kontrastierender Farbe eingedruckt werden soll, vorher Bildpunkte in der Grundfarbe des Grunddesigns waren.

Vorzugsweise weist der zweite Programmteil als Funktion auf, dem Gesichtspunkt der platzsparenden Anordnung der Druckteile auf dem Druckmedium Rechnung zu tragen. So kann man z. B. neben Brustteilen noch schmale Stoffteile für Kragen platzieren. Es kann praktisch sein, manche Druckteile z.B. um 90° für den Druck zu drehen, um so das Bedruckungsmedium möglichst gut auszunutzen.

Vorzugsweise wird die von dem zweiten Programmteil generierte Grafikdatei an einen Druckertreiber, vorzugsweise einen Raster Image Processing-Druckertreiber, gegeben, der einen Drucker für das Drucken von Druckteilen steuert. Der zweite Programmteil arbeitet vorzugsweise mit Vektordaten. Der Druckertreiber bereitet die Ausgabedaten des zweiten Programmteils so auf, dass mit ihnen der Drucker (der normalerweise in X/Y-Koordinaten gesteuert wird) optimal gesteuert werden kann. Außerdem kann man mit RIP eine perfektere Farbabstimmung beim Drucken erreichen. Im Druckertreiber kann eine Spool-Funktion liegen, damit die Daten nach und nach abgearbeitet werden können. Dort kann auch eine Spiegelungsfunktion liegen, was beim Drucken auf Zwischenmedium praktisch ist.

Vierter Gegenstand der Erfindung ist ein Computersystem, in dem ein Datenverarbeitungsprogramm installiert ist, das einsetzbar ist beim Herstellen eines Satzes von Druckbildern für ein Weiterverarbeiten zu einem Satz von bedruckten Stoffteilen für ein Bekleidungsstück aus zusammengenähten Stoffteilen, wobei das in Funktion befindliche Datenverarbeitungsprogramm sich auswirkt auf den Datenverkehr zwischen einem Computer eines Herstellers und einem für Datenverkehr mit dem Herstellercomputer verbundenen Computer eines Kunden und auf die Steuerung eines Druckers, wobei das Datenverarbeitungsprogramm aufweist:
(a) einen ersten Programmteil, der es dem Kunden ermöglicht, die Ausführung des gewünschten Bekleidungsstücks über die Herstellercomputer -Kundencomputer -Verbindung festzulegen, indem er bei mehreren Ausführungsparametern - z. B. Grunddesign, Farbei, Größe - jeweils ein Auswahlziel von mehreren möglichen Auswahlzielen festlegt, wobei der erste Programmteil die Funktion aufweist, unter Berücksichtigung des Festlegungsbefehle einen Datensatz zusammenzustellen, der für die gewünschte Ausführung des Bekleidungsstücks repräsentativ ist;
(b) und einen zweiten Programmteil, der die Funktion aufweist, unter Nutzung des genannten Datensatzes eine Grafikdatei zu generieren, die als Grundlage für das Drucken des Satzes von Druckbildern auf einem Bedruckungsmedium einsetzbar ist, wobei das Bedruckungsmedium entweder direkt eine Stofffläche ist oder ein Zwischenmedium ist, dessen Bedruckung später auf Stoff übertragen wird,
(c) wobei zu dem Satz von Druckbildern Druckbilder mit unterschiedlichen Abmessungen gehören und wobei die Druckbilder jeweils, mit oder ohne Nahtzugabe, die Abmessungen eines bedruckten Stoffteils für das Zusammennähen zu dem Bekleidungsstück haben.

Man sieht, dass auf diesem Computersystem dasjenige Datenverarbeitungsprogramm installiert ist, welches weiter vorne beschrieben worden ist. Alle Vorzugsmerkmale, die im Zusammenhang mit dem erfindungsgemäßen Datenverarbeitungsprogramm beschrieben worden sind, können vorzugsweise auch bei dem erfindungsgemäßen Computersystem vorhanden sein.

Es wird darauf hingewiesen, dass alle Ausführungen, die weiter vorn im Zusammenhang mit dem Datenverarbeitungsprogramm gemacht worden sind, auch hinsichtlich des erfindungsgemäßen Verfahrens und hinsichtlich der erfindungsgemäßen Produktionseinrichtung gelten und dort benutzt werden können. Das gleiche gilt in umgekehrter Richtung für Ausführungen, die weiter vorn im Zusammenhang mit dem erfindungsgemäßen Verfahren gemacht worden sind.

Bei dem erfindungsgemäßen Verfahren und dem erfindungsgemäßen Datenverarbeitungsprogramm und dem erfindungsgemäßen Computersystem ist es möglich und bevorzugt, einerseits eine beträchtliche Anzahl von Ausführungsparametern für die Auswahlaktivität des Kunden bzw. Programmbenutzers bereitzustellen, und - was ganz besonders wichtig ist - andererseits bei einigen der Auswahlparameter jeweils eine sehr große Zahl von Auswahlzielen anzubieten. So ist es bevorzugt, mindestens 50 Grunddesigns und/oder mindestens 40 Farben und/oder mindestens vier Größen und/oder mindestens fünf Schriftarten für Schriftobjekte anzubieten.

Ein noch weiterer Gegenstand der Erfindung ist ein Computerprogrammprodukt, welches die weiter oben beschriebenen Merkmale des erfindungsgemäßen Datenverarbeitungsprogramms aufweist. Vorzugsmerkmale des Datenverarbeitungsprogramms sind auch Vorzugsmerkmale des Computerprogrammprodukts. Eine bevorzugte Ausführung des Computerprogrammprodukts ist ein maschinenlesbarer Datenträger, auf dem das erfindungsgemäße Datenverarbeitungsprogramm gespeichert ist.

Vorstehend ist bei "Verfahren zum ...", "Produktionseinrichtung zum ...", "Datenverarbeitungsprogramm für ...", "Computersystem für ..." durchweg von der Herstellung eines Bekleidungsstücks im Singular gesprochen worden. Selbstverständlich soll diese Ausdrucksweise auch denjenigen Fall mit umfassen, dass mehrere Bekleidungsstücke in engem zeitlichem Zusammenhang hergestellt werden. Bei den "Stoffteilen für ein Bekleidungsstück" ist im Plural gesprochen worden, da in aller Regel mehrere Stoffteile für ein vollständiges Bekleidungsstück benötigt werden.

Die Erfindung wird anschließend anhand von schematisiert zeichnerisch dargestellten Beispielen noch näher erläutert.

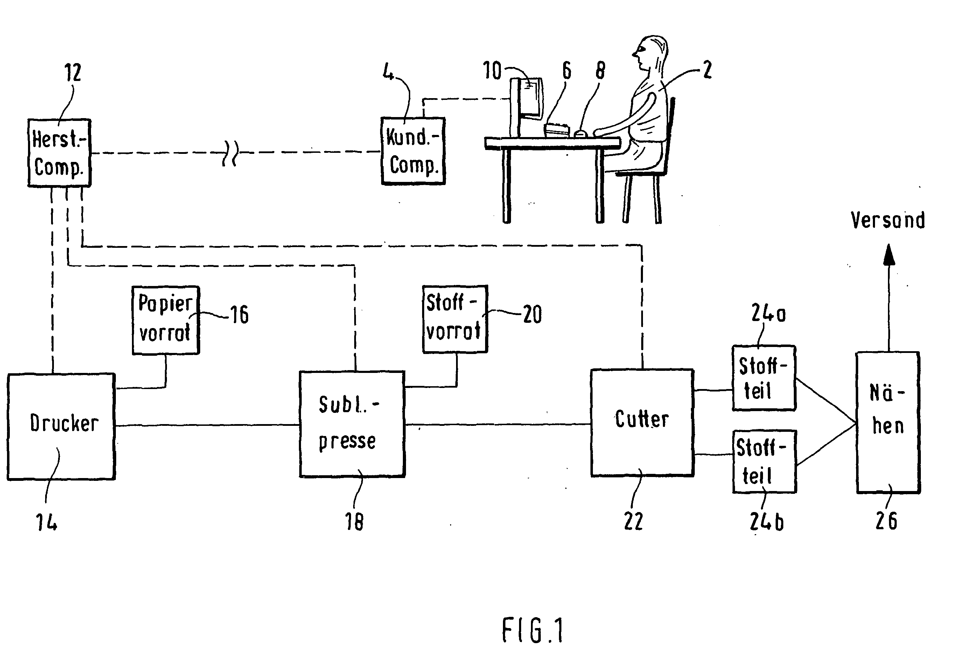

- Fig. 1: zeigt die wesentlichen körperlichen Einrichtungen, mit denen ein erfindungsgemäßes Verfahren durchgeführt werden kann, wobei die Zeichnung zugleich den Charakter eines Diagramms des Verfahrensablaufs hat.
- Fig. 2 und 3: sind Screen Shots, die das Aussehen eines Bildschirms beim Festlegen von Auswahlzielen zeigen;
- Fig. 4: veranschaulicht die Arbeitsweise eines erfindungsgemäßen Datenverarbeitungsprogramms;
- Fig. 5: veranschaulicht einen Teil eines Datensatzes;
- Fig. 6: zeigt, wie die Stoffteile für zwei Trikots nach der Sublimation auf einer Stoffbahn erscheinen.

Ein Kunde 2 besitzt einen Kundencomputer 4, z. B. einen PC, und bedient diesen mittels Tastatur 6 bzw. Maus 8 und Bildschirm 10. Der Kundencomputer 4 ist über das Internet on-line verbunden mit einem Herstellercomputer 12, z. B. einem Netzwerkserver eines Herstellunternehmens. Der Herstellercomputer 12 hat in seinem Speicher für mehrere Ausführungsparameter (zahlreiche Beispiele für Ausführungsparameter wurden weiter vorn genannt) jeweils mehrere Auswahlziele als auszuwählende Möglichkeiten gespeichert. Z. B. nach Art eines Menüs und/oder mit Hilfe von Linkfeldern kann der Kunde 2 von Ausführungsparameter zu Ausführungsparameter gehen und sich bei jedem Ausführungsparameter die zur Verfügung stehenden Auswahlziele entweder als Wort oder als optische Darstellung zeigen lassen. Bei einem Teil der Ausführungsparameter (z. B. Schriftobjekt, Größe) wird das Auswahlziel durch Eingeben (z. B. von Buchstaben, Zahlen) festgelegt. Durch Anklicken oder Eingeben wird dann jeweils die Auswahl vorgenommen, und am Ende steht die Festlegung für die gesamte Bekleidungsstück-Ausführung. Danach kann, ebenfalls on-line, das eigentliche Bestellen und die Vereinbarung der Bezahlung erfolgen.

Somit hat der Herstellercomputer 12 alle Daten zur Abwicklung des Herstellens von einem bestellten oder mehreren bestellten Bekleidungsstücken zur Verfügung (und ggf. auch die Daten für Versandadresse und Bezahlung).

Im Folgenden wird zunächst das Herstellen geschildert, wenn die Bestellung nur ein einziges Bekleidungsstück umfaßt, z. B. eine Badehose:

Ein Drucker 14 wird aufgrund von Daten aus dem Herstellercomputer 12 so gesteuert, daß er auf ein- und denselben Papierabschnitt ein Badehosen-Vorderteil und ein Badehosen-Rückteil bedruckt, z. B. in Geschlecht männlich, Größe XL, Beine mittellang, Badehosen-Rückteil Grundfarbe blau mit weißem großen Stern, Badehosen-Vorderteil Längsstreifen blau/rot, ohne Nummer, ohne Namen, ohne Werbung. Der Drucker 14 erhält jeweils automatisch oder von Hand einen Papierabschnitt von einem Papiervorrat 16 (als Rolle oder als Stapel).

Der bedruckte Papierabschnitt wird automatisch oder von Hand an eine Sublimationspresse 18 übergeben, die zu dem betreffenden Papierabschnitt vor Durchführung des Sublimationsvorgangs einen Stoffabschnitt von einem Stoffvorrat 20 (Rolle oder Stapel) erhält. Zur Durchführung des Sublimationsvorgangs muß der Stoffabschnitt flächig auf dem Papierabschnitt aufliegen, was von Hand oder automatisch geschehen kann. Die Sublimationspresse 18 führt den Sublimationsvorgang durch Anwendung von Druck und Wärme durch. Die Sublimationspresse 18 kann mit einer beheizten rotierenden Walze arbeiten, gegen die eine endlose, umlaufende Filzbahn gedrückt wird; in dem Spalt zwischen der Walze und der Filzbahn werden, flächig aufeinanderliegend, der Papierabschnitt und der Stoffabschnitt transportiert. Alternativ kann man eine stationär arbeitende Presse einsetzen, in welche der Papierabschnitt und der Stoffabschnitt eingelegt werden. Dann wird die beheizte Presse geschlossen. Sublimation heißt Farbentransfer von dem Papierabschnitt in den Stoffabschnitt.

Automatisiert oder von Hand wird der Stoffabschnitt dann einem Cutter 22 zugeführt. Aufgrund von Daten aus dem Herstellercomputer 12 schneidet der Cutter 22 gleichzeitig oder nacheinander das Badehosen-Vorderteil und das Badehosen-Rückteil aus dem Stoffabschnitt aus, so daß jetzt zwei Stoffteile 24a und 24b vorliegen. Zum Zusammennähen der Stoffteile 24a und 24b an einer Station 26 werden die Stoffteile 24a und 24b entweder zusammen verpackt und zur örtlich weiter entfernten Station 26 versandt oder gleich in der Nähe der Einrichtungen 14, 16, 18, 20, 22 zusammengenäht.

Wenn von ein- und demselben Bekleidungsstück in gleicher Ausbildung mehrere, z. B. 30 für einen Sportverein oder 100 für eine Gruppe von Sportgeschäften oder 1000 für eine Kaufhauskette, gefertigt werden sollen, läuft der Herstellvorgang analog ab, wie zuvor für ein einzelnes Bekleidungsstück beschrieben. Es kann allerdings von Vorteil sein, die Steuerdaten für den Drucker 14 und/oder für den Cutter 22 jeweils an dem betreffenden Gerät zwischenzuspeichern.

Aus der vorhergehenden Beschreibung ist auch ersichtlich, daß es bei dem erfindungsgemäßen Verfahren problemlos möglich ist, eine größere Anzahl von Bekleidungsstücken herzustellen, bei denen jeweils ein Auswahlziel von Bekleidungsstück zu Bekleidungsstück wechselt (z. B. je ein Fußballtrikot mit Spielernummer 1, je ein Fußballtrikot mit Spielernummer 2 etc.), und es ist möglich, jeweils eine Gruppe gleicher Bekleidungsstücke herzustellen und dann zu wechseln (z. B. 10 Basketballhosen Größe M, 20 Basketballhosen Größe L, 20 Basketballhosen Größe XL etc.). All dies wird von dem Herstellercomputer 12 direkt oder indirekt automatisch gesteuert.

Aus dem zuvor Beschriebenen ist ersichtlich, daß der Kunde 2 ein äußerst bequemes Auswählen unter extrem vielen Möglichkeiten hat (ohne daß der Hersteller z. B. Musterungsserien körperlich anfertigen müßte) und daß das Herstellunternehmen mit einem Minimum an menschlicher Arbeitskraft auskommt und auch den untersten Grenzfall einer einzelnen Bestellmenge, nämlich ein einziges Bekleidungsstück, noch rationell herstellen kann.

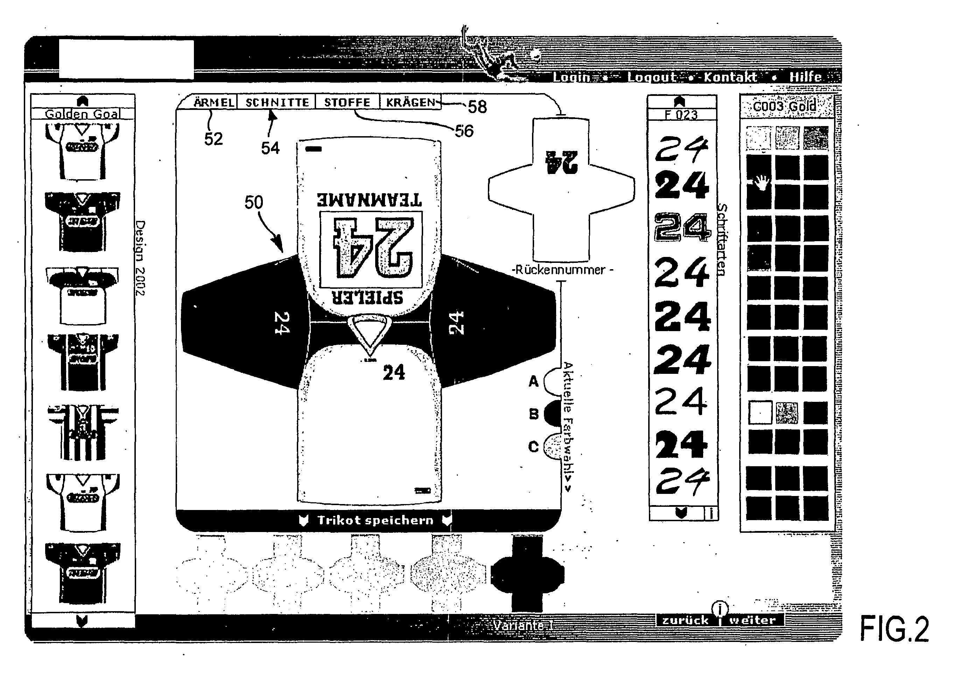

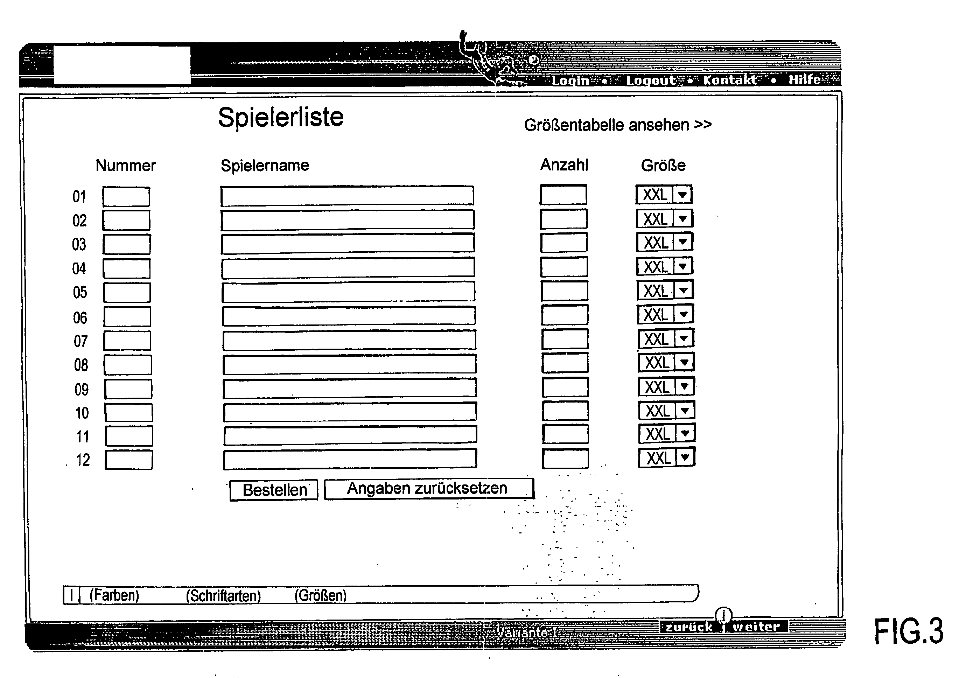

Anhand der Figuren 2 und 3 soll veranschaulicht werden, wie sich für den Kunden 2 die Auwahlzielfestlegung auf seinem Bildschirm 10 darstellt.

Fig. 2 zeigt den Zustand, nachdem der Kunde 2 auf der linken Leiste ein bestimmtes Grunddesign 50 festgelegt hat. Das festgelegte Grunddesign 50 wird schematisiert auf dem Bildschirm 10 angezeigt, und zwar Vorderteil (auf dem Bildschirm mehr unten) und Rückteil (auf dem Bildschirm mehr oben) in die Bildschirmebene geklappt und gleichsam längs der späteren Schulternaht zusammengehalten. Auch die Ärmelteile sind in die Bildschirmebene geklappt und mit dem Vorderteil und dem Rückteil gleichsam längs der Ärmelnähte verbunden.

Wenn der Kunde 2 mit der Maus 8 auf ein Feld 52 "Ärmel" geht, erscheint eine Leiste, auf welcher der Kunde 2 per Mausklick eine Festlegung zwischen mehreren Ärmellängen treffen kann. Wenn der Kunde 2 mit der Maus 8 auf ein Feld 54 "Schnitte" geht, öffnet sich eine Auswahlleiste für mehrere Schnitte, z. B. männlich oder weiblich. Wenn der Kunde 2 mit der Maus 8 auf ein Feld 56 "Stoffe" geht, öffnet sich eine Auswahlleiste mit mehreren in Worten angegebenen Stoffarten, unter denen er eine Auswahlzielfestlegung treffen kann. Wenn der Kunde 2 mit der Maus 8 auf ein Feld 58 "Krägen" geht, öffnet sich eine Auswahlleiste, in welcher der Kunde 2 unter mehreren - als Worte oder als grafische Darstellung angegebenen - Kragenarten, z. B. Polokragen oder glatter Kragen als schmaler Stoffstreifen, wählen kann.

In Fig. 2 ist der Zustand dargestellt, dass der Kunde 2 den Ausführungsparameter "Schriftarten" angewählt hat. In der rechts von dem dargestellten, festgelegten Grunddesign 50 angezeigten Leiste kann der Kunde 2 eine Auswahlzielfestlegung unter einer ganzen Reihe von Schriftarten, z. B. mehr geradegedruckt, mehr schreibartig, mit oder ohne Umrandung, wählen. Die in Fig. 2 gezeigte Zahl "24" ist ein Platzhalter, der später durch die tatsächlich gewünschte Spielernummer ersetzt wird.

Ganz rechts in Fig. 2 sieht man eine Auswahlleiste für Farben. Der Kunde 2 geht zunächst auf eines der Farbfelder A, B, C (A steht für die Hauptfarbe bei Brustteil und Rückenteil, B steht für die Farbe der Ärmel und der Schulterpartien, C steht für den farbkontrastierenden Randstreifen an Brustteil und Rückenteil und für den Kragen) und legt dann auf der Farbleiste das jeweilige Farbziel für die Flächen A, B, C fest. Die grafische Darstellung des Grunddesigns 50 wechselt jetzt die Farben hin zu den festgelegten drei Farben.

Die gezeigten Auswahlleisten für Grunddesign, Schriftart, Farben sind Scroll-Leisten, die also erheblich länger sind als in Fig. 2 gezeigt und durchgerollt werden können.

Eine hinsichtlich der bisher beschriebenen Ausführungsparameter durchgeführte Auswahlzielfestlegung kann gespeichert werden und wird in der waagerechten Leiste unterhalb der Grunddesigndarstellung 50 angezeigt. Sie kann gespeichert verbleiben, damit sie für spätere Bestellungen des Kunden 2 zur Verfügung steht.

Fig. 3 zeigt, wie der Bildschirm 10 bei der nächsten Stufe der Auswahlzielfestlegung, nämlich der Eingabe der sogenannten Exemplardaten, aussieht. Der Kunde 2 kann die einzudruckende Spielernummer, den einzudruckenden Spielernamen, hierfür die Anzahl der Trikots und hierfür die Größe des Trikots eingeben. Bei Spielernummer, Spielernamen und Anzahl geschieht die Eingabe mit der Tastatur 6, bei der Größe kann der Kunde 2 per Mausklick die möglichen Größen durchrollen.

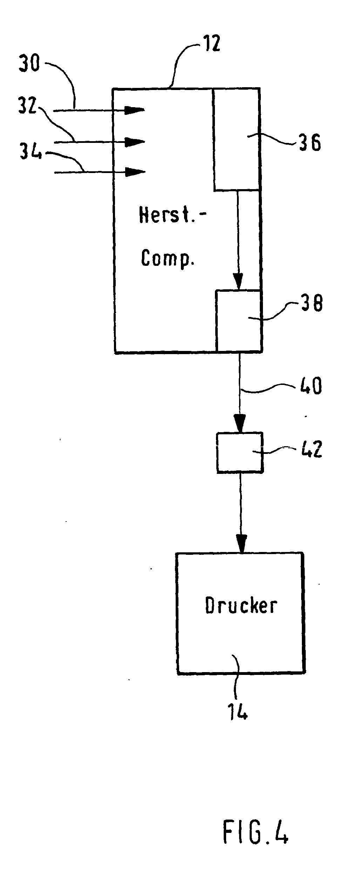

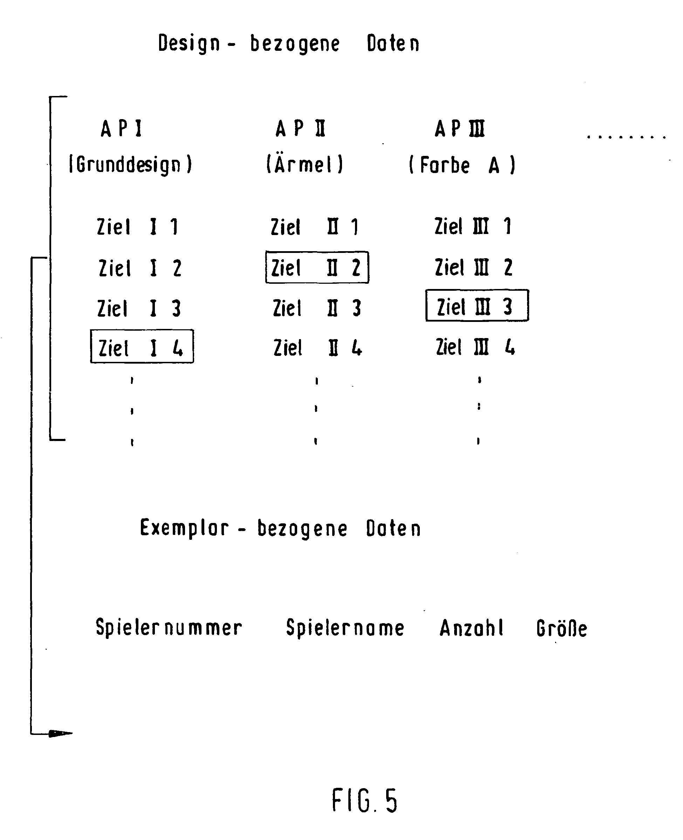

Anhand der Figuren 4 und 5 soll ein erfindungsgemäßes Datenverarbeitungsprogramm beispielhaft genauer veranschaulicht werden.

In Fig. 4 sieht man einen Herstellercomputer 12. Mit den Pfeilen 30, 32, 34 sind Auswahlzielbefehle eines Programmbenutzers, eingegeben vorzugsweise über die beschriebene Kundencomputer 4-Herstellercomputer 12-Verbindung, symbolisiert. Hierbei symbolisiert der Pfeil 30 Auswahlzielbefehle, die aufgrund einer graphischen Darstellung mehrerer möglicher Auswahlziele z. B. durch Anklicken gegeben werden. Der Pfeil 32 symbolisiert Auswahlzielbefehle, die durch Einschreiben in einer Eingabemaske gegeben werden. Der Pfeil 34 symbolisiert Auswahlzielbefehle, die nicht für alle Bekleidungsstücke einer Anzahl von Bekleidungsstücken gleich sind.

Mit der Gesamtheit der Auswahlzielbefehle 30, 32, 34 wird ein Datensatz 36 erstellt, den man auch als eine Auftragsdatei eines bestimmten Kunden verstehen kann. Durch Fig. 5 wird veranschaulicht, wie der Datensatz 36 aussieht. Die Abkürzung AP steht für Ausführungsparameter. Der obere Teil-Datensatz enthält die Design-bezogenen Daten, wobei hier die festgelegten Auswahlziele I4, II2, III3 eingerahmt sind. Der untere Teil-Datensatz enthält die Exemplar-bezogenen Daten. Zu jedem Exemplar-bezogenen Teil-Datensatz wird der Design-bezogene Teil-Datensatz hinzugefügt. Wenn n Bekleidungsstücke hergestellt werden sollen, geschieht das Ganze n-fach.

Der Herstellercomputer 12 generiert unter Berücksichtigung der Daten des Datensatzes 36 eine oder mehrere Grafikdateien 38. Die Grafikdateien 38 sind die optische Darstellung eines zu druckenden Druckteils und werden vom Drucker 14 gedruckt.

Ein zweiter Programmteil greift auf einen Datenspeicher zu. In diesem sind die Grafikinformationen der wählbaren zu druckenden Druckteile für alle Grunddesigns (z.B. Querstreifen) und Variationen (z.B. Langarm und Kurzarm) abgelegt.

Dabei besteht ein Druckteil (z.B. Vorderteil) aus einer oder mehreren Teilflächen (z.B. Streifen auf dem Vorderteil).

Der zweite Programmteil holt für jede gewählte Größe (z.B. XL) aus dem Datenspeicher diejenigen Druckteile, die dem Auswahlziel-n-Tupel aus dem Datensatz 36 entsprechen (z.B. Vorderteil, Rückenteil, Polokragen, lange Ärmel im gewählten Design).

In den nächsten Schritten werden die Druckteile entsprechend den Daten aus dem Datensatz 36 angepasst.

Im Datenspeicher sind alle farblich variierbaren Teilflächen Farbgruppen zugeordnet. Die einzelnen Teilflächen werden entsprechend ihrer Farbgruppe mit den im Datensatz 36 gewählten Farben eingefärbt (z.B. wurde im Datensatz 36 gesagt, die Hauptfarbe soll weiß sein, die Farbe des Querstreifens rot).

Des weiteren werden (bei Bedarf) die im Datensatz 36 spezifizierten zusätzlichen Design-Elemente (z.B. Logos) in die Druckteile eingesetzt. Dabei werden die Logos sowohl an die entsprechende Stelle im Druckteil gesetzt als auch transformiert. Transformieren heißt, dass das jeweilige Logo auf die gewünschten Abmessungen skaliert wird und eventuell Drehungen und Verzerrungen vorgenommen werden.

Analog werden auch die Schriftobjekte (z.B. Vereinsname, Spielernummer) in die entsprechenden Druckteile eingesetzt. Dabei werden auch wieder Position und Transformation übernommen. Zusätzlich werden die Schriftobjekte hinsichtlich der im Datensatz 36 enthaltenen Auswahlzielfestlegungen in Typografie (d.h. Schriftart, Formatierung etc.) und Farbgebung angepasst.

Auch die Schriftinhalte werden gemäß Datensatz 36 angepasst. So bekommen z.B. alle Trikots den Mannschaftsnamen "AC Milano", aber jedes Trikot eine andere Nummer und einen anderen Spielernamen. Der zweite Programmteil passt bei Bedarf die Abmessungen und die Typografie des Schriftobjekts noch an den Schriftinhalt an. So hat z.B. der Name "J.R." ein andere Breite als der Name "Ehrenmann", und evtl. wird für den Namen "J.R." auch eine größere Schriftart verwendet.

Des weiteren ordnet der zweite Programmteil die Druckteile hinsichtlich der Restriktionen der Zielmedien (Breite und Länge von Stoff und evtl. Papier) und hinsichtlich des weiteren Arbeitsprozesses möglichst ideal an.

Als Letztes speichert der zweite Programmteil die fertigen Druckteile in einem für den Druckertreiber interpretierbaren Format.

Für die eigentliche Herstellung des Bekleidungsstücks werden die Daten 40 aus einer Grafikdatei 38, meist jedoch aus mehreren Grafikdateien 38, von dem Herstellercomputer 12 an einen Druckertreiber 42 gegeben. Der Druckertreiber 42 steuert den Drucker 14 derart, dass alle Papier-Druckteile, entsprechend den herzustellenden Stoffteilen, des betrachteten Auftrags zeitlich nacheinander gedruckt werden.

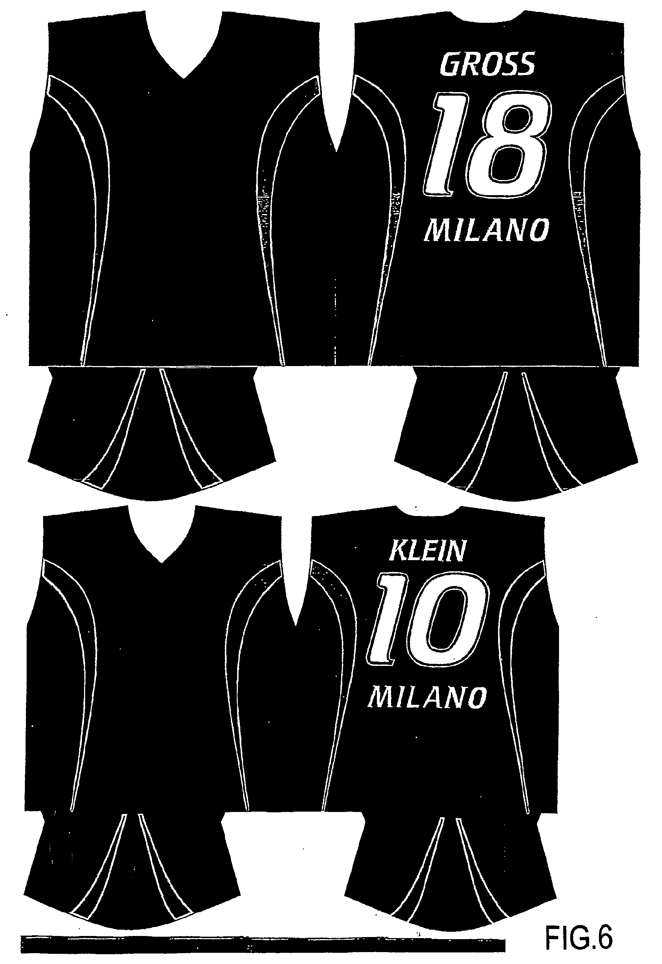

Fig. 6 veranschaulicht, wie die Stoffteile 24 nach dem Schritt der Sublimation auf einer Stoffbahn aussehen. In platzsparender Anordnung befindet sich auf einer Stoffbahn von z. B. der Breite 1,5 m links oben ein Vorderteil, rechts oben ein Rückteil, links unten ein erster Ärmel und rechts unten ein zweiter Ärmel. Die Stoffteile sind, wo es geht, mit gemeinsamer Grenzlinie dicht aneinander sublimiert. Ganz unten in Fig. 6 sieht man, mit gemeinsamer Grenzlinie dicht aneinander sublimiert, die zwei Kragenteile für die zwei Trikots. Die Worte "GROSS" und "KLEIN" stehen stellvertretend für zwei Spielernamen; das Wort "MILANO" steht stellvertretend für einen Teamnamen.

Fig. 6 veranschaulicht auch, wie die Gesamt-Grafikdatei für einen Herstellungsauftrag aussieht. Fig. 6 spiegelt ja lediglich wieder, wie der Drucker 14 aufgrund der Grafikdatei 38 (rechts/links-spiegelbildlich zu Fig. 6) das Papier bedruckt hat, von dem dann durch Sublimation die Stoffteile 24 erzeugt worden sind.

In der Praxis startet man den Drucker 14 am besten, nachdem der Herstellercomputer 12 eine größere Anzahl von Aufträgen entgegengenommen hat, z.B. nach der Mittagspause eines jeden Arbeitstages. Dann werden alle vorhandenen Aufträge durch Drucken, Sublimieren, ggf. Ausschneiden, ggf. Zusammennähen abgearbeitet. Z.B. kann eine ganze Papierrolle (über 1 m Breite, 130 m Länge) oder mehr bedruckt werden.

Im Rahmen der Erfindung ist es unschwer möglich, bei jedem Auftrag eine vom Herstellercomputer 12 vergebene Auftragsnummer, ggf. auch mit Datum, an einer nicht besonders ins Auge springenden, kleinen Stelle des Trikots einzudrucken, außerdem z.B. eine gleiche Zahl bei allen Druckteilen für das betreffende Bekleidungsstück. Auf diese Weise kann man die zusammengehörigen Druckteile jedes Bekleidungsstücks auch nach dem Ausschneiden leicht wieder zusammenfinden.

## Patentansprüche

1. Verfahren zum Herstellen eines Satzes von Druckbildern für ein Weiterverarbeiten zu einem Satz von bedruckten Stoffteilen (24a; 24b) für ein Bekleidungsstück aus zusammengenähten Stoffteilen (24a; 24b), aufweisend folgende Schritte:
(a) Ein Computer (12) eines Herstellers wird für Datenverkehr verbunden mit einem Computer (4) eines Kunden (2);
(b) der Kunde (2) legt die Ausführung des gewünschten Bekleidungsstücks über die Herstellercomputer (12)-Kundencomputer (4)-Verbindung fest, indem er bei mehreren Ausführungsparametern - z.B. Grunddesign, Farbe, Größe - jeweils ein Auswahlziel von mehreren möglichen Auswahlzielen festlegt;
(c) auf Grund von Daten aus der genannten Ausführungsfestlegung wird mittels eines Druckers (14) der Satz von Druckbildern auf einem Bedruckungsmedium gedruckt, wobei das Bedruckungsmedium entweder direkt eine Stofffläche ist oder ein Zwischenmedium ist, dessen Bedruckung später auf Stoff übertragen werden kann,
(d) wobei zu dem Satz von Druckbildern Druckbilder mit unterschiedlichen Abmessungen gehören und wobei die Druckbilder jeweils, mit oder ohne Nahtzugabe, die Abmessungen eines bedruckten Stoffteils (24a; 24b) für das Zusammennähen zu dem Bekleidungsstück haben.

2. Verfahren nach Anspruch 1,
**dadurch gekennzeichnet, dass** aus der Stofffläche, die entweder aus der direkten Bedruckung stammt oder aus der Bedruckungsübertragung von dem Zwischenmedium stammt, Stoffteile (24a; 24b) - z. B. Brustteil, Rükkenteil, Ärmelteil - ausgeschnitten werden und so der Satz von bedruckten Stoffteilen (24a; 24b) erzeugt wird.

3. Verfahren nach Anspruch 1,
**dadurch gekennzeichnet, dass** aus einer unbedruckten Stofffläche Stoffteile (24a; 24b) jeweils mit den Abmessungen des herzustellenden bedruckten Stoffteils (24a; 24b) - z. B. Brustteil, Rückenteil, Ärmelteil - ausgeschnitten werden und dass die ausgeschnittenen Stoffteile später der Bedruckungsübertragung von dem Zwischenmedium unterworfen werden, wodurch der Satz von bedruckten Stoffteilen erzeugt wird.

4. Verfahren nach Anspruch 2 oder 3,
**dadurch gekennzeichnet, dass** mehrere bedruckte Stoffteile (24a; 24b) zu dem Bekleidungsstück zusammengenäht werden.

5. Verfahren nach einem der Ansprüche 1 bis 4,
**dadurch gekennzeichnet, dass** mindestens bei einem Ausführungsparameter dem Kunden auf einer Anzeigeeinrichtung die möglichen Auswahlziele grafisch dargestellt werden.

6. Verfahren nach einem der Ansprüche 1 bis 5,
**dadurch gekennzeichnet, dass** mindestens bei einem Teil der Auswahlzielfestlegungen dem Kunden auf einer Anzeigeeinrichtung grafisch dargestellt wird, wie das Bekleidungsstück mit der jeweiligen Auswahlzielfestlegung aussieht.

7. Verfahren nach einem der Ansprüche 1 bis 6,
**dadurch gekennzeichnet, dass** zu den Ausführungsparametern mindestens einer aus der folgenden Gruppe gehört:
Grunddesign - z.B. Längsstreifen, Brustquerstreifen, bogenförmige Farbflächengrenze -;
Armlänge/Beinlänge/Gesamtlänge;
Schnitt - z.B. tailliert, männlich, weiblich -;
Halsausschnittform;
Kragenart;
Bündchen ja/nein;
Farbe;
mehrere unterschiedliche Farben;
Schriftobjekt;
Platzierung des Schriftobjekts;
Schriftart des Schriftobjekts;
Logo;
Platzierung des Logos;
Größe des Bekleidungsstücks;
Stoffqualität.

8. Verfahren nach Anspruch 7,
**dadurch gekennzeichnet, dass** zu den Ausführungsparametern mindestens die Folgenden gehören:
Grunddesign;
mehrere unterschiedliche Farben;
Größe des Bekleidungsstücks.

9. Verfahren nach einem der Ansprüche 1 bis 8,
**dadurch gekennzeichnet, dass** bei einem Teil der Ausführungsparameter die Auswahlzielfestlegung für eine ganze Anzahl von Bekleidungsstücken gleich vorgenommen wird;
und dass bei einem anderen Teil der Ausführungsparameter die Auswahlzielfestlegung für die Anzahl von Bekleidungsstücken nicht gleich vorgenommen wird.

10. Verfahren nach einem der Ansprüche 1 bis 9,
**dadurch gekennzeichnet, dass** das Bedruckungsmedium Papier ist und dass die Bedruckung durch Sublimation auf Stoff übertragen wird.

11. Verfahren nach einem der Ansprüche 1 bis 10,
**dadurch gekennzeichnet, dass** das Ausschneiden der Stoffteile mittels eines automatisierten Cutters erfolgt.

12. Verfahren nach Anspruch 11,
**dadurch gekennzeichnet, dass** der Cutter auf Grund von Daten aus der Festlegung der Bekleidungsstück-Ausführung gesteuert wird.

13. Verfahren nach einem der Ansprüche 1 bis 12,
**dadurch gekennzeichnet, dass** die Bestellung des Kunden (2) über die Herstellercomputer (12)-Kundencomputer (4)-Verbindung erfolgt.

14. Verfahren nach einem der Ansprüche 1 bis 13,
**dadurch gekennzeichnet, dass** die Bezahlung des Bekleidungsstücks über die Herstellercomputer (12)-Kundencomputer (4)-Verbindung vereinbart wird.

15. Verfahren nach einem der Ansprüche 1 bis 14,
**dadurch gekennzeichnet, dass** dem Kunden (2) seine Ausführungsfestlegung übermittelt wird, damit er in Bestätigung dieser Ausführungsfestlegung bestellen kann.

16. Produktionseinrichtung zum Herstellen eines Satzes von Druckbildern für ein Weiterverarbeiten zu einem Satz von bedruckten Stoffteilen (24a; 24b) für ein Bekleidungsstück aus zusammengenähten Stoffteilen (24a; 24b),
wobei die Produktionseinrichtung aufweist:
(a) einen Computer (12) eines Herstellers, der bei einer Ausführungsfestlegung für das gewünschte Bekleidungsstück mit einem Computer (4) eines Kunden (2) für Datenverkehr verbunden ist,
(b) wobei der Herstellercomputer (12) die Fähigkeit hat, dass der Kunde (2) die Ausführung des gewünschten Bekleidungsstücks über die Herstellercomputer (12)-Kundencomputer (4)-Verbindung festlegen kann, indem er bei mehreren Ausführungsparametern - z. B. Grunddesign, Farbe, Größe - jeweils ein Auswahlziel von mehreren möglichen Auswahlzielen festlegt;
(c) und einen Drucker (14) zum Drucken eines Satzes von Druckbildern auf einem Bedruckungsmedium, wobei das Bedruckungsmedium entweder direkt eine Stofffläche ist oder ein Zwischenmedium ist, dessen Bedruckung später auf Stoff übertragen werden kann,
(d) wobei der Drucker (14) beim Betrieb auf Grund von Daten aus der genannten Ausführungsfestlegung derart elektronisch gesteuert werden kann, dass er einen Satz von Druckbildern druckt, zu dem Druckbilder mit unterschiedlichen Abmessungen gehören, wobei die Druckbilder jeweils, mit oder ohne Nahtzugabe, die Abmessungen eines bedruckten Stoffteils (24a; 24b) für das Zusammennähen zu dem Bekleidungsstück haben.

17. Produktionseinrichtung nach Anspruch 16,
**dadurch gekennzeichnet, dass** sie eine Station (22) zum Ausschneiden der bedruckten Stoffteile (24a; 24b) - z. B. Brustteil, Rückenteil, Ärmelteil - aufweist.

18. Produktionseinrichtung nach Anspruch 16,
**dadurch gekennzeichnet, dass** sie eine Station zum Ausschneiden unbedruckter Stoffteile jeweils mit den Abmessungen des herzustellenden bedruckten Stoffteils (24a; 24b) - z. B. Brustteil, Rückenteil, Ärmelteil - aufweist.

19. Produktionseinrichtung nach einem der Ansprüche 16 bis 18,
**dadurch gekennzeichnet, dass** sie eine Station (18) zur Bedruckungsübertragung von dem Zwischenmedium auf Stoff aufweist.

20. Produktionseinrichtung nach einem der Ansprüche 16 bis 19,
**dadurch gekennzeichnet, dass** sie eine Station (26) zum Zusammennähen mehrerer bedruckter Stoffteile (24a; 24b) zu dem Bekleidungsstück aufweist.

21. Datenverarbeitungsprogramm, das einsetzbar ist beim Herstellen eines Satzes von Druckbildern für ein Weiterverarbeiten zu einem Satz von bedruckten Stoffteilen (24a; 24b) für ein Bekleidungsstück aus zusammengenähten Stoffteilen (24a; 24b),
wobei das in Funktion befindliche Datenverarbeitungsprogramm sich auswirkt auf den Datenverkehr zwischen einem Computer (12) eines Herstellers und einem für Datenverkehr mit dem Herstellercomputer (12) verbundenen Computer (4) eines Kunden (2) und auf die Steuerung eines Druckers (14), wobei das Datenverarbeitungsprogramm aufweist:
(a) einen ersten Programmteil, der es dem Kunden (2) ermöglicht, die Ausführung des gewünschten Bekleidungsstücks über die Herstellercomputer (12)-Kundencomputer (4)-Verbindung festzulegen, indem er bei mehreren Ausführungsparametern - z. B. Grunddesign, Farbe, Größe - jeweils ein Auswahlziel von mehreren möglichen Auswahlzielen festlegt, wobei der erste Programmteil die Funktion aufweist, unter Berücksichtigung des Festlegungsbefehle einen Datensatz zusammenzustellen, der für die gewünschte Ausführung des Bekleidungsstücks repräsentativ ist;
(b) und einen zweiten Programmteil, der die Funktion aufweist, unter Nutzung des genannten Datensatzes eine Grafikdatei zu generieren, die als Grundlage für das Drucken des Satzes von Druckbildern auf einem Bedruckungsmedium einsetzbar ist, wobei das Bedruckungsmedium entweder direkt eine Stofffläche ist oder ein Zwischenmedium ist, dessen Bedruckung später auf Stoff übertragen wird,
(c) wobei zu dem Satz von Druckbildern Druckbilder mit unterschiedlichen Abmessungen gehören und wobei die Druckbilder jeweils, mit oder ohne Nahtzugabe, die Abmessungen eines bedruckten Stoffteils (24a; 24b) für das Zusammennähen zu dem Bekleidungsstück haben.

22. Datenverarbeitungsprogramm nach Anspruch 21,
**dadurch gekennzeichnet, dass** der erste Programmteil als Funktion aufweist, mindestens bei einem Ausführungsparameter die Festlegung eines Auswahlziels mit Hilfe einer grafischen Darstellung mehrerer möglicher Auswahlziele auf einer kundenseitigen Anzeigeeinrichtung zu ermöglichen.

23. Datenverarbeitungsprogramm nach Anspruch 21 oder 22,
**dadurch gekennzeichnet, dass** der erste Programmteil als Funktion aufweist, ein Bekleidungsstück auf einer kundenseitigen Anzeigeeinrichtung grafisch darzustellen und, mindestens bei einem Teil der Ausführungsparameter, die grafische Darstellung nach Maßgabe der Festlegungsbefehle zu ändern.

24. Datenverarbeitungsprogramm nach einem der Ansprüche 17 bis 23,
**dadurch gekennzeichnet, dass** der erste Programmteil als Funktion aufweist, dass der Kunde (2) eine getroffene Zielfestlegung ändern kann.

25. Datenverarbeitungsprogramm nach einem der Ansprüche 21 bis 24,
**dadurch gekennzeichnet, dass** zu den Ausführungsparametern mindestens einer aus der folgenden Gruppe gehört:
Grunddesign - z.B. Längsstreifen, Brustquerstreifen, bogenförmige Farbflächengrenze) -;
Armlänge/Beinlänge/Gesamtlänge;
Schnitt - z.B. tailliert, männlich, weiblich -;
Halsausschnittform;
Kragenart;
Bündchen ja/nein;
Farbe;
mehrere unterschiedliche Farben;
Schriftobjekt;
Platzierung des Schriftobjekts;
Schriftart des Schriftobjekts;
Logo;
Platzierung des Logos;
Größe des Bekleidungsstücks;
Stoffqualität.

26. Datenverarbeitungsprogramm nach Anspruch 25,
**dadurch gekennzeichnet, dass** zu den Ausführungsparametern mindestens die Folgenden gehören:
Grunddesign;
mehrere unterschiedliche Farben;
Größe des Bekleidungsstücks.

27. Datenverarbeitungsprogramm nach einem der Ansprüche 21 bis 26,
**dadurch gekennzeichnet, dass** der erste Programmteil zur Herstellung einer zusammengehörigen Anzahl von Bekleidungsstücken folgende Funktionen aufweist:
- es existiert mindestens ein Ausführungsparameter erster Art mit für die ganze Anzahl von Bekleidungsstücken gleicher Auswahlzielfestlegung, bezeichnet als Anzahlparameter;
- es existiert mindestens ein Ausführungsparameter zweiter Art mit bei der Anzahl von Bekleidungsstücken ungleich festlegbarer Auswahlzielfestlegung; bezeichnet als Exemplarparameter;
- die Auswahlzielfestlegung bei dem mindestens einen Anzahlparameter und die jeweilige Auswahlzielfestlegung bei dem mindestens einen Exemplarparameter erfolgen nacheinander;
- und unter Zusammenführung der mindestens einen Anzahlparameter-Auswahlzielfestlegung und mindestens einer Exemplarparameter-Auswahlzielfestlegung wird für jedes Bekleidungsstück der Anzahl von Bekleidungsstücken der jeweilige Datensatz zusammengestellt.

28. Datenverarbeitungsprogramm nach einem der Ansprüche 21 bis 27,
**dadurch gekennzeichnet, dass** der zweite Programmteil mit einem Datenspeicher zusammenarbeitet, in dem für die Druckbilder des herzustellenden Bekleidungsstücks jeweils mehrere Ausgangs-Grafikdateien gespeichert sind, und zwar mindestens hinsichtlich eines Ausführungsparameters Ausgangs-Grafikdateien für alle Auswahlziele;
und dass der zweite Programmteil als Funktion aufweist, nach Maßgabe des Datensatzes eine Ausgangs-Grafikdatei herauszugreifen und hinsichtlich der Auswahlzielfestlegung anderer Ausführungsparameter zu modifizieren.

29. Datenverarbeitungsprogramm nach einem der Ansprüche 21 bis 28,
**dadurch gekennzeichnet, dass** der zweite Programmteil als Funktion aufweist, dem Gesichtspunkt der platzsparenden Anordnung der Druckbilder auf dem Druckmedium Rechnung zu tragen.

30. Datenverarbeitungsprogramm nach einem der Ansprüche 21 bis 29,
**dadurch gekennzeichnet, dass** die von dem zweiten Programmteil generierte Grafikdatei an einen Druckertreiber, vorzugsweise einen Raster Image Processing-Druckertreiber, gegeben wird, der den Drucker (14) für das Drucken von Druckbildern steuert.

31. Computersystem, in dem ein Datenverarbeitungsprogramm installiert ist, das einsetzbar ist beim Herstellen eines Satzes von Druckbildern für ein Weiterverarbeiten zu einem Satz von bedruckten Stoffteilen (24a; 24b) für ein Bekleidungsstück aus zusammengenähten Stoffteilen (24a; 24b),
wobei das in Funktion.befindliche Datenverarbeitungsprogramm sich auswirkt auf den Datenverkehr zwischen einem Computer (12) eines Herstellers und einem für Datenverkehr mit dem Herstellercomputer (12) verbundenen Computer (4) eines Kunden (2) und auf die Steuerung eines Druckers (14), wobei das Datenverarbeitungsprogramm aufweist:
(a) einen ersten Programmteil, der es dem Kunden (2) ermöglicht, die Ausführung des gewünschten Bekleidungsstücks über die Herstellercomputer (12)-Kundencomputer (4)-Verbindung festzulegen, indem er bei mehreren Ausführungsparametern - z. B. Grunddesign, Farbei, Größe - jeweils ein Auswahlziel von mehreren möglichen Auswahlzielen festlegt, wobei der erste Programmteil die Funktion aufweist, unter Berücksichtigung des Festlegungsbefehle einen Datensatz zusammenzustellen, der für die gewünschte Ausführung des Bekleidungsstücks repräsentativ ist;
(b) und einen zweiten Programmteil, der die Funktion aufweist, unter Nutzung des genannten Datensatzes eine Grafikdatei zu generieren, die als Grundlage für das Drucken des Satzes von Druckbildern auf einem Bedruckungsmedium einsetzbar ist, wobei das Bedruckungsmedium entweder direkt eine Stofffläche ist oder ein Zwischenmedium ist, dessen Bedruckung später auf Stoff übertragen wird,
(c) wobei zu dem Satz von Druckbildern Druckbilder mit unterschiedlichen Abmessungen gehören und wobei die Druckbilder jeweils, mit oder ohne Nahtzugabe, die Abmessungen eines bedruckten Stoffteils (24a; 24b) für das Zusammennähen zu dem Bekleidungsstück haben.

32. Computersystem nach Anspruch 31, bei dem das installierte Datenverarbeitungsprogramm **dadurch gekennzeichnet ist,**
**dass** der erste Programmteil als Funktion aufweist, mindestens bei einem Ausführungsparameter die Festlegung eines Auswahlziels mit Hilfe einer grafischen Darstellung mehrerer möglicher Auswahlziele auf einer kundenseitigen Anzeigeeinrichtung zu ermöglichen.

33. Computersystem nach Anspruch 31 oder 32, bei dem das installierte Datenverarbeitungsprogramm **dadurch gekennzeichnet ist,**
**dass** der erste Programmteil als Funktion aufweist, ein Bekleidungsstück auf einer kundenseitigen Anzeigeeinrichtung grafisch darzustellen und, mindestens bei einem Teil der Ausführungsparameter, die grafische Darstellung nach Maßgabe der Festlegungsbefehle zu ändern.

34. Computersystem nach einem der Ansprüche 31 bis 33, bei dem das installierte Datenverarbeitungsprogramm **dadurch gekennzeichnet ist,**
**dass** der erste Programmteil als Funktion aufweist, dass der Kunde (2) eine getroffene Zielfestlegung ändern kann.

35. Computersystem nach einem der Ansprüche 31 bis 34, bei dem das installierte Datenverarbeitungsprogramm **dadurch gekennzeichnet ist,**
**dass** zu den Ausführungsparametern mindestens einer aus der folgenden Gruppe gehört:
Grunddesign - z.B. Längsstreifen, Brustquerstreifen, bogenförmige Farbflächengrenze -;
Armlänge/Beinlänge/Gesamtlänge;
Schnitt - z.B. tailliert, männlich, weiblich -;
Halsausschnittform;
Kragenart;
Bündchen ja/nein;
Farbe;
mehrere unterschiedliche Farben;
Schriftobjekt;
Platzierung des Schriftobjekts;
Schriftart des Schriftobjekts;
Logo;
Platzierung des Logos;
Größe des Bekleidungsstücks;
Stoffqualität.

36. Computersystem nach Anspruch 35, bei dem das installierte Datenverarbeitungsprogramm **dadurch gekennzeichnet ist,**
**dass** zu den Ausführungsparametern mindestens die Folgenden gehören:
Grunddesign;
mehrere unterschiedliche Farben;
Größe des Bekleidungsstücks.

37. Computersystem nach einem der Ansprüche 31 bis 36, bei dem das installierte Datenverarbeitungsprogramm **dadurch gekennzeichnet ist,**
**dass** der erste Programmteil zur Herstellung einer zusammengehörigen Anzahl von Bekleidungsstücken folgende Funktionen aufweist:
- es existiert mindestens ein Ausführungsparameter erster Art mit für die ganze Anzahl von Bekleidungsstücken gleicher Auswahlzielfestlegung, bezeichnet als Anzahlparameter;
- es existiert mindestens ein Ausführungsparameter zweiter Art mit bei der Anzahl von Bekleidungsstücken ungleich festlegbarer Auswahlzielfestlegung, bezeichnet als Exemplarparameter;
- die Auswahlzielfestlegung bei dem mindestens einen Anzahlparameter und die jeweilige Auswahlzielfestlegung bei dem mindestens einen Exemplarparameter erfolgen nacheinander;
- und unter Zusammenführung der mindestens einen Anzahlparameter-Auswahlzielfestlegung und mindestens einer Exemplarparameter-Auswahlzielfestlegung wird für jedes Bekleidungsstück der Anzahl von Bekleidungsstücken der jeweilige Datensatz zusammengestellt.

38. Computersystem nach einem der Ansprüche 31 bis 37, bei dem das installierte Datenverarbeitungsprogramm **dadurch gekennzeichnet ist,**
**dass** der zweite Programmteil mit einem Datenspeicher zusammenarbeitet, in dem für die Druckbilder des herzustellenden Bekleidungsstücks jeweils mehrere Ausgangs-Grafikdateien gespeichert sind, und zwar mindestens hinsichtlich eines Ausführungsparameters Ausgangs-Grafikdateien für alle Auswahlziele;
und **dass** der zweite Programmteil als Funktion aufweist, nach Maßgabe des Datensatzes eine Ausgangs-Grafikdatei herauszugreifen und hinsichtlich der Auswahlzielfestlegung anderer Ausführungsparameter zu modifizieren.

39. Computersystem nach einem der Ansprüche 31 bis 38, bei dem das installierte Datenverarbeitungsprogramm **dadurch gekennzeichnet ist,**
**dass** der zweite Programmteil als Funktion aufweist, dem Gesichtspunkt der platzsparenden Anordnung der Druckbilder auf dem Druckmedium Rechnung zu tragen.

40. Computersystem nach einem der Ansprüche 31 bis 39, bei dem das installierte Datenverarbeitungsprogramm **dadurch gekennzeichnet ist,**
**dass** die von dem zweiten Programmteil generierte Grafikdatei an einen Druckertreiber, vorzugsweise einen Raster Image Processing-Druckertreiber, gegeben wird, der einen Drucker für das Drucken von Druckbildern steuert.

## Claims

1. A method of making a set of print images for further processing thereof so as to form a set of printed fabric pieces (24a; 24b) for an article of clothing made of sewn together fabric pieces (24a; 24b),
said method comprising the following steps:
(a) a computer (12) of a producer is connected for data exchange with a computer (4) of a customer (2);
(b) the customer (2) sets the design of the desired article of clothing via the producer computer (12) / customer computer (4) connection by setting for a plurality of design parameters - e.g. basic design, colour, size - a respective selection target from several selection targets possible;
(c) based on data from said design setting, the set of print images is printed on a printing medium by means of a printer (14), said printing medium being either directly a fabric panel or an intermediate medium the print of which may be transferred to fabric later on;
(d) the set of print images comprising print images of different dimensions and the print images each having the dimensions, either with seam allowance or without seam allowance, of a printed fabric piece (24a; 24b) to be sewn together so as to form the article of clothing.

2. A method according to claim 1,
**characterized in that** fabric pieces (24a, 24b) - e.g. chest piece, back piece, sleeve piece - are cut out from the fabric panel that either originates from direct printing or originates from the print transfer from the intermediate medium, thus producing the set of printed fabric pieces (24a; 24b).

3. A method according to claim 1,
**characterized in that** fabric pieces (24a, 24b) - e.g. chest piece, back piece, sleeve piece -, each having the dimensions of the printed fabric piece (24a; 24b) to be produced, are cut out from an unprinted fabric panel, and that the cut fabric pieces are subjected to the print transfer from the intermediate medium later on, thus producing the set of printed fabric pieces.

4. A method according to claim 2 or 3,
**characterized in that** several printed fabric pieces (24a; 24b) are sewn together to form the article of clothing.

5. A method according to any of claims 1 to 4,
**characterized in that** for at least one design parameter, the possible selection targets are indicated graphically to the customer on a display means.

6. A method according to any of claims 1 to 5,
**characterized in that**, for at least part of the selection target settings, it is graphically indicated to the customer on a display means what the article of clothing looks like with the respective selection target setting.

7. A method according to any of claims 1 to 6,
**characterized in that** the design parameters comprise at least one of the following group:
basic design - e.g. longitudinal stripes, transverse stripes on chest, arcuate boundary of colour areas -;
arm length/leg length/overall length;
cut - e.g. slim-fit, male, female-;
shape of neck opening;
type of collar;
wristband yes/no;
colour;
several different colours;
script object;
placement of script object;
typeface of script object;
logo;
placement of logo;
size of article of clothing;
fabric quality.

8. A method according to claim 7,
**characterized in that** the design parameters include at least the following ones:
basic design;
several different colours;
size of the article of clothing.

9. A method according to any of claims 1 to 8,
**characterized in that**, for part of the design parameters, the selection target setting is made the same for a multiple number of articles of clothing; and that, for another part of the design parameters, the selection target setting is not made the same for the multiple number of articles of clothing.

10. A method according to any of claims 1 to 9,
**characterized in that** the printing medium is paper and **in that** the print is transferred to fabric by sublimation.

11. A method according to any of claims 1 to 10,
**characterized in that** cutting out of the fabric pieces takes place by means of an automated cutter.

12. A method according to claim 11,
**characterized in that** the cutter is controlled on the basis of data from the setting of the article of clothing design.

13. A method according to any of claims 1 to 12,
**characterized in that** the placement of an order by the customer (2) is effected via the producer computer (12) / customer computer (4) connection.

14. A method according to any of claims 1 to 13,
**characterized in that** an agreement as to the payment for the article of clothing is made via the producer computer (12) / customer computer (4) connection.

15. A method according to any of claims 1 to 14,
**characterized in that** the customer's design setting is transmitted to the customer (2) to allow the latter to order in confirmation of this design setting.

16. A production means for making a set of print images for further processing thereof so as to form a set of printed fabric pieces (24a; 24b) for an article of clothing made of sewn together fabric pieces (24a; 24b),
said production means comprising:
(a) a computer (12) of a producer which is connected to a computer (4) of a customer (2) for data exchange when a design setting is made for the desired article of clothing,
(b) the producer computer (12) being adapted to allow the customer (2) to set the design of the desired article of clothing via the producer computer (12) / customer computer (4) connection by setting for a plurality of design parameters - e.g. basic design, colour, size - a respective selection target of several selection targets possible;
(c) and a printer (14) for printing a set of print images on a printing medium, the printing medium being either directly a fabric panel or an intermediate medium the print of which may be transferred to fabric later on,
(d) the printer (14), during operation thereof on the basis of data from said design setting, being adapted to be controlled electronically such that it prints a set of print images including print images of different dimensions, the print images each having the dimensions, either with seam allowance or without seam allowance, of a printed fabric piece (24a; 24b) to be sewn together so as to form the article of clothing.

17. A production means according to claim 16,
**characterized in that** it comprises a station (22) for cutting out the printed fabric pieces (24a, 24b) - e.g. chest piece, back piece, sleeve piece.

18. A production means according to claim 16,
**characterized in that** it comprises a station for cutting out unprinted fabric pieces each having the dimensions of the printed fabric piece (24a; 24b) to be produced - e.g. chest piece, back piece, sleeve piece.

19. A production means according to any of claims 16 to 18,
**characterized in that** it comprises a station (18) for print transfer from the intermediate medium to fabric.

20. A production means according to any of claims 16 to 19,
**characterized in that** it comprises a station (26) for sewing together a plurality of printed fabric pieces (24a; 24b) so as to form the article of clothing.

21. A data processing program adapted to be utilized in making a set of print images for further processing thereof so as to form a set of printed fabric pieces (24a; 24b) for an article of clothing made of sewn together fabric pieces (24a; 24b),
the operative data processing program having effects on the data exchange between a computer (12) of a producer and a computer (4) of a customer (2) connected for data exchange with the producer computer (12), and on the control of a printer (14),
said data processing program comprising:
(a) a first program part permitting the customer (2) to set the design of the desired article of clothing via the producer computer (12) / customer computer (4) connection by setting for a plurality of design parameters - e.g. basic design, colour, size - a respective selection target of several selection targets possible, said first program part having the function of compiling a data set representative of the desired design of the article of clothing in consideration of the setting commands;
(b) and a second program part having the function of generating a graphics file making use of said data set, said graphics file being adapted to be utilized as basis for printing the set of print images on a printing medium, said printing medium being either directly a fabric panel or an intermediate medium the print of which is transferred to fabric later on,
(c) the set of print images comprising print images of different dimensions and the print images each having the dimensions, either with seam allowance or without seam allowance, of a printed fabric piece (24a; 24b) to be sewn together to form the article of clothing.

22. A data processing program according to claim 21,
**characterized in that** the first program part has the function of allowing for at least one design parameter the setting of a selection target with the aid of a graphical representation of several possible selection targets on a display means on the side of the customer.

23. A data processing program according to claim 21 or 22,
**characterized in that** the first program part has the function of graphically representing an article of clothing on a display means on side of the.customer and, at least for part of the design parameters, of altering the graphical representation in accordance with the setting commands.

24. A data processing program according to any of claims 17 to 23,
**characterized in that** the first program part has the function that the customer (2) may alter a selection target setting made.

25. A data processing program according to any of claims 21 to 24,
**characterized in that** the design parameters comprise at least one of the following group:
basic design - e.g. longitudinal stripes, transverse stripes on chest, arcuate boundary of colour areas -;
arm length/leg length/overall length;
cut - e.g. slim-fit, male, female -;
shape of neck opening;
type of collar;
wristband yes/no;
colour;
several different colours;
script object;
placement of script object;
typeface of script object;
logo;
placement of logo;
size of article of clothing;
fabric quality.

26. A data processing program according to claim 25,
**characterized in that** the design parameters include at least the following ones:
basic design;
several different colours;
size of the article of clothing.

27. A data processing program according to any of claims 21 to 26,
**characterized in that** the first program part for making a related number of articles of clothing comprises the following functions:
- there is at least one design parameter of a first kind which has the same selection target setting for the full number of articles of clothing, which is referred to as number parameter;
- there is at least one design parameter of a second kind which has a selection target setting permitting a dissimilar setting for the number of articles of clothing, which is referred to as specimen parameter;
- the selection target setting for the at least one number parameter and the respective selection target setting for the at least one specimen parameter are made one after the other;
- and by combining the at least one number parameter selection target setting and at least one specimen parameter selection target setting, the respective data set is compiled for each article of clothing of the number of articles of clothing.

28. A data processing program according to any of claims 21 to 27,
**characterized in that** the second program part cooperates with a data memory storing a respective plurality of initial graphics files for the print images of the article of clothing to be produced, namely initial graphics files for all selection targets at least with respect to one design parameter; and that the second program part has the function of picking out an initial graphics file in accordance with the data set and to modify the same with respect to the selection target setting of other design parameters.

29. A data processing program according to any of claims 21 to 28,
**characterized in that** the second program part has the function of taking account of the aspect of a space-saving arrangement of the print images on the printing medium.

30. A data processing program according to any of claims 21 to 29,
**characterized in that** the graphics file generated by the second program part is given to a printer driver, preferably a raster image processing printer driver, which controls the printer (14) for printing print images.

31. A computer system having installed therein a data processing program which may be utilized in making a set of print images for further processing thereof so as to form a set of printed fabric pieces (24a; 24b) for an article of clothing of sewn together fabric pieces (24a; 24b),
the operative data processing program having effects on the data exchange between a computer (12) of a producer and a computer (4) of a customer (2) connected for data exchange with the producer computer (12), and on the control of a printer (14),
said data processing program comprising:
(a) a first program part permitting the customer (2) to set the design of the desired article of clothing via the producer computer (12) / customer computer (4) connection by setting for a plurality of design parameters - e.g. basic design, colour, size - a respective selection target of several selection targets possible, said first program part having the function of compiling a data set representative of the desired design of the article of clothing in consideration of the setting commands;
(b) and a second program part having the function of generating a graphics file making use of said data set, said graphics file being adapted to be utilized as basis for printing the set of print images on a printing medium, said printing medium being either directly a fabric panel or an intermediate medium the print of which is transferred to fabric later on,
(c) the set of print images comprising print images of different dimensions and the print images each having the dimensions, either with seam allowance or without seam allowance, of a printed fabric piece (24a; 24b) to be sewn together to form the article of clothing.

32. A computer system according to claim 31,
in which the installed data processing program is **characterized in**
**that** the first program part has the function of allowing for at least one design parameter the setting of a selection target with the aid of a graphical representation of several possible selection targets on a display means on the side of the customer.

33. A computer system according to claim 31 or 32,
in which the installed data processing program is **characterized in**
**that** the first program part has the function of graphically representing an article of clothing on a display means on the side of the customer and, at least for part of the design parameters, of altering the graphical representation in accordance with the setting commands.

34. A computer system according to any of claims 31 to 33,
in which the installed data processing program is **characterized in**
**that** the first program part has the function that the customer (2) may alter a selection target setting made.

35. A computer system according to any of claims 31 to 34,
in which the installed data processing program is **characterized in**
**that** the design parameters comprise at least one of the following group:
basic design - e.g. longitudinal stripes, transverse stripes on chest, arcuate boundary of colour areas -;
arm length/leg length/overall length;
cut - e.g. slim-fit, male, female -;
shape of neck opening;
type of collar;
wristband yes/no;
colour;
several different colours;
script object;
placement of script object;
typeface of script object;
logo;
placement of logo;
size of article of clothing;
fabric quality.

36. A computer system according to claim 35,
in which the installed data processing program is **characterized in**
**that** the design parameters include at least the following ones:
basic design;
several different colours;
size of the article of clothing.

37. A computer system according to any of claims 31 to 36,
in which the installed data processing program is **characterized in**
**that** the first program part for making a related number of articles of clothing comprises the following functions:
- there is at least one design parameter of a first kind which has the same selection target setting for the full number of articles of clothing, which is referred to as number parameter;
- there is at least one design parameter of a second kind which has a selection target setting permitting a dissimilar setting for the number of articles of clothing, which is referred to as specimen parameter;
- the selection target setting for the at least one number parameter and the respective selection target setting for the at least one specimen parameter are made one after the other;
- and by combining the at least one number parameter selection target setting and at least one specimen parameter selection target setting, the respective data set is compiled for each article of clothing of the number of articles of clothing.

38. A computer system according to any of claims 31 to 37,
in which the installed data processing program is **characterized in**
**that** the second program part cooperates with a data memory storing a respective plurality of initial graphics files for the print parts of the article of clothing to be produced, namely initial graphics files for all selection targets at least with respect to one design parameter;
and **that** the second program part has the function of picking out an initial graphics file in accordance with the data set and to modify the same with respect to the selection target setting of other design parameters.

39. A computer system according to any of claims 31 to 38,
in which the installed data processing program is **characterized in**
**that** the second program part has the function of taking account of the aspect of a space-saving arrangement of the print parts on the printing medium.

40. A computer system according to any of claims 31 to 39,
in which the installed data processing program is **characterized in**
**that** the graphics file generated by the second program part is given to a printer driver, preferably a raster image processing printer driver, which controls a printer for printing print parts.

## Revendications

1. Procédé pour fabriquer une série d'impressions en vue de réaliser une série de pièces de tissu (24a ; 24b) imprimées prévues pour un vêtement formé de pièces de tissu (24a ; 24b) cousues ensemble, comportant les étapes suivantes :
(a) un ordinateur (12) d'un fabricant est relié à un ordinateur (4) d'un client (2) en vue d'une circulation de données ;
(b) le client (2) fixe le modèle du vêtement voulu par l'intermédiaire de la liaison ordinateur du fabricant (12) -ordinateur du client (4) en fixant en présence de plusieurs paramètres de modèle - par exemple la forme de base, la couleur, la taille - une cible de sélection parmi plusieurs cibles de sélection possibles ;
(c) à partir des données provenant de la fixation du modèle, la série d'impressions est imprimée à l'aide d'une imprimante (14) sur un support d'impression, le support d'impression consistant soit directement en une surface de tissu, soit en un support intermédiaire dont l'impression peut être transférée ultérieurement sur du tissu,
(d) étant précisé que la série d'impressions couvre des impressions de dimensions différentes et que les impressions ont chacune, avec ou sans surplus de couture, les dimensions d'une pièce de tissu (24a ; 24b) imprimée prévue pour le montage du vêtement.

2. Procédé selon la revendication 1, **caractérisé en ce que** dans la surface de tissu qui provient soit de l'impression directe, soit du transfert d'impression à partir du support intermédiaire, on coupe des pièces de tissu (24 ; 24b) - par exemple le devant, le dos, les manches - et on produit ainsi la série de pièces de tissu (24a ; 24b) imprimées.

3. Procédé selon la revendication 1, **caractérisé en ce que** dans une surface de tissu non imprimée, on coupe des pièces de tissu (24a ; 24b) présentant les dimensions de la pièce de tissu (24a ; 24b) imprimée à fabriquer - par exemple le devant, le dos, les manches - et **en ce que** les pièces de tissu coupées sont soumises ultérieurement au transfert d'impression à partir du support intermédiaire, ce qui produit la série de pièces de tissu imprimées.

4. Procédé selon la revendication 2 ou 3, **caractérisé en ce que** l'on coud ensemble plusieurs pièces de tissu (24a ; 24b) imprimées, pour former le vêtement.

5. Procédé selon l'une des revendications 1 à 4, **caractérisé en ce qu'**en présence d'au moins un paramètre de modèle, on présente graphiquement au client, sur un affichage, les cibles de sélection possibles.

6. Procédé selon l'une des revendications 1 à 5, **caractérisé en ce qu'**en présence d'une partie au moins des fixations de cible de sélection, on montre graphiquement au client, sur un affichage, à quoi ressemble le vêtement avec la fixation de cible de sélection.

7. Procédé selon l'une des revendications 1 à 6, **caractérisé en ce que** les paramètres de modèle comprennent l'un au moins des paramètres du groupe suivant :
- forme de base - par exemple rayures verticales, rayures horizontales, limite courbe entre des surfaces de couleur ;
- longueur des bras/longueur des jambes/longueur totale ;
- coupe - par exemple cintrée, homme, femme ;
- forme.de l'encolure ;
- type de col ;
- poignets oui/non ;
- couleur ;
- plusieurs couleurs différentes ;
- objet écrit ;
- positionnement de l'objet écrit ;
- type de caractère de l'objet écrit ;
- logo ;
- positionnement du logo ;
- taille du vêtement ;
- qualité du tissu.

8. Procédé selon la revendication 7, **caractérisé en ce que** les paramètres de modèle comprennent au moins les paramètres suivants :
- forme de base ;
- plusieurs couleurs différentes ;
- taille du vêtement.

9. Procédé selon l'une des revendications 1 à 8, **caractérisé en ce que** pour une partie des paramètres de modèle, la fixation de cible de sélection est réalisée de la même manière pour toute une quantité de vêtements ;
et **en ce que** pour une autre partie des paramètres de modèle, la fixation de cible de sélection n'est pas réalisée de la même manière pour la quantité de vêtements.

10. Procédé selon l'une des revendications 1 à 9, **caractérisé en ce que** le support d'impression est constitué par du papier et **en ce que** l'impression est transférée par sublimation sur du tissu.

11. Procédé selon l'une des revendications 1 à 10, **caractérisé en ce que** la coupe des pièces de tissu se fait à l'aide d'une coupeuse automatisée.

12. Procédé selon la revendication 11, **caractérisé en ce que** la coupeuse est commandée à partir de données provenant de la fixation du modèle de vêtement.

13. Procédé selon l'une des revendications 1 à 12, **caractérisé en ce que** la commande du client (2) est passée par l'intermédiaire de la liaison ordinateur du fabricant (12)-ordinateur du client (4).

14. Procédé selon l'une des revendications 1 à 13, **caractérisé en ce que** l'on convient du paiement du vêtement par l'intermédiaire de la liaison ordinateur du fabricant (12)-ordinateur du client (4).

15. Procédé selon l'une des revendications 1 à 14, **caractérisé en ce que** la fixation de modèle du client (2) est transmise à celui-ci afin qu'il puisse passer sa commande en confirmant cette fixation de modèle.

16. Dispositif de production pour fabriquer une série d'impressions en vue de réaliser une série de pièces de tissu (24a ; 24b) imprimées prévues pour un vêtement formé de pièces de tissu (24a ; 24b) cousues ensemble, comportant :
(a) un ordinateur (12) d'un fabricant qui, quand un modèle est fixé pour le vêtement voulu, est relié à un ordinateur (4) d'un client (2) en vue d'une circulation de données ;
(b) l'ordinateur du fabricant (12) permettant au client (2) de fixer le modèle du vêtement voulu par l'intermédiaire de la liaison ordinateur du fabricant (12)-ordinateur du client (4), lequel client, en présence de plusieurs paramètres de modèle - par exemple la forme de base, la couleur, la taille - fixe une cible de sélection parmi plusieurs cibles de sélection possibles ;
(c) et une imprimante (14) pour imprimer une série d'impressions sur un support d'impression, le support d'impression consistant soit directement en une surface de tissu, soit en un support intermédiaire dont l'impression peut être transférée ultérieurement sur du tissu,
(d) l'imprimante (14), en fonctionnement, pouvant être commandée électroniquement à partir de données provenant de la fixation de modèle de manière à imprimer une série d'impressions à laquelle appartiennent des impressions de dimensions différentes, les impressions ayant chacune, avec ou sans surplus de couture, les dimensions d'une pièce de tissu (24a ; 24b) imprimée prévue pour le montage du vêtement.

17. Dispositif de production selon la revendication 16, **caractérisé en ce qu'**il comporte un poste (22) pour couper les pièces de tissu (24a ; 24b) imprimées - par exemple le devant, le dos, les manches.

18. Dispositif de production selon la revendication 16, **caractérisé en ce qu'**il comporte un poste pour couper des pièces de tissu non imprimées aux dimensions de la pièce de tissu (24a ; 24b) imprimée à fabriquer - par exemple le devant, le dos, les manches.

19. Dispositif de production selon l'une des revendications 16 à 18, **caractérisé en ce qu'**il comporte un poste (18) pour le transfert d'impression sur du tissu à partir du support intermédiaire.

20. Dispositif de production selon l'une des revendications 16 à 19, **caractérisé en ce qu'**il comporte un poste (26) pour coudre ensemble plusieurs pièces de tissu (24a ; 24b) imprimées, en vue de former le vêtement.

21. Programme informatique utilisable lors de la fabrication d'une série d'impressions en vue de réaliser une série de pièces de tissu (24a ; 24b) imprimées prévues pour un vêtement formé de pièces de tissu (24a ; 24b) cousues ensemble,
le programme informatique en fonctionnement ayant des conséquences sur la circulation de données entre un ordinateur (12) d'un fabricant et un ordinateur (4) d'un client (2) relié à l'ordinateur (12) en vue d'une circulation de données, et sur la commande d'une imprimante (14),
le programme informatique comportant :
(a) un premier élément de programme qui permet au client (2) de fixer le modèle du vêtement voulu par l'intermédiaire de la liaison ordinateur du fabricant (12)-ordinateur du client (4), en fixant en présence de plusieurs paramètres de modèles - par exemple la forme de base, la couleur, la taille - une cible de sélection parmi plusieurs cibles de sélection possibles, le premier élément de programme ayant pour fonction de réunir, en tenant compte des instruction de fixation, un jeu de données qui est représentatif du modèle de vêtement voulu ;
(b) et un second élément de programme qui a pour fonction de produire, en utilisant le jeu de données, un fichier graphique qui est utilisable comme base pour imprimer la série d'impressions sur un support d'impression, celui-ci consistant soit directement en une surface de tissu, soit en un support intermédiaire dont l'impression est transférée ultérieurement sur du tissu,
(c) la série d'impressions couvrant des impressions de dimensions différentes et les impressions ayant chacune, avec ou sans surplus de couture, les dimensions d'une pièce de tissu (24a ; 24b) imprimée prévue pour le montage du vêtement.

22. Programme informatique selon la revendication 21, **caractérisé en ce que** le premier élément de programme a pour fonction de permettre, en présence d'au moins un paramètre de modèle, de fixer une cible de sélection à l'aide d'une représentation graphique, sur un affichage prévu côté client, de plusieurs cibles de sélection possibles.

23. Programme informatique selon la revendication 21 ou 22, **caractérisé en ce que** le premier élément de programme a pour fonction de représenter graphiquement un vêtement sur un affichage prévu côté client et, au moins pour une partie des paramètres de modèle, de modifier la représentation graphique conformément aux instructions de fixation.

24. Programme informatique selon l'une des revendications 17 à 23, **caractérisé en ce que** le premier élément de programme a pour fonction de permettre au client (2) de modifier une fixation de choix déjà faite.

25. Programme informatique selon l'une des revendications 21 à 24, **caractérisé en ce que** les paramètres de modèle comprennent l'un au moins des paramètres du groupe suivant :
- forme de base - par exemple rayures verticales, rayures horizontales, limite courbe entre des surfaces de couleur ;
- longueur des bras/longueur des jambes/longueur totale ;
- coupe - par exemple cintrée, homme, femme ;
- forme de l'encolure ;
- type de col ;
- poignets oui/non ;
- couleur ;
- plusieurs couleurs différentes ;
- objet écrit ;
- positionnement de l'objet écrit ;
- type de caractère de l'objet écrit ;
- logo ;
- positionnement du logo ;
- taille du vêtement ;
- qualité du tissu.

26. Programme informatique selon la revendication 25, **caractérisé en ce que** les paramètres de modèle'comprennent au moins les paramètres suivants :
- forme de base ;
- plusieurs couleurs différentes ;
- taille du vêtement.

27. Programme informatique selon l'une des revendications 21 à 26, **caractérisé en ce que** le premier élément de programme pour fabriquer une quantité de vêtements qui vont ensemble présente les fonctions suivantes :
- il existe au moins un paramètre de modèle d'une première sorte présentant la même fixation de cible de sélection pour toute cette quantité de vêtement, que l'on appelle paramètre de quantité ;
- il existe au moins un paramètre de modèle d'une seconde sorte avec une fixation de cible de fixation différente pour la quantité de vêtements, que l'on appelle paramètre d'exemplaires ;
- la fixation de cible de sélection pour le ou les paramètres de quantité et la fixation de cible de sélection pour le ou les paramètres d'exemplaires se font l'une après l'autre ;
- et en réunissant la fixation de cible de sélection pour au moins un paramètre de quantité et la fixation de cible de sélection pour au moins un paramètre d'exemplaires, on constitue pour chaque vêtement de la quantité de vêtements le jeu de données correspondant.

28. Programme informatique selon l'une des revendications 21 à 27, **caractérisé en ce que** le second élément de programme coopère avec une mémoire de données dans laquelle sont stockés pour les impressions du vêtement à fabriquer plusieurs fichiers graphiques de sortie, à savoir les fichiers graphiques de sortie pour toutes les cibles de sélection au moins en ce qui concerne un paramètre de modèle ;
et **en ce que** le second élément de programme a pour fonction d'extraire un fichier graphique de sortie en fonction du jeu de données et de le modifier quant à la fixation de cible de sélection d'autres paramètres de modèle.

29. Programme informatique selon l'une des revendications 21 à 28, **caractérisé en ce que** le second programme a pour fonction de tenir compte de l'aspect de la disposition peu encombrante des impressions sur le support d'impression.

30. Programme informatique selon l'une des revendications 21 à 29, **caractérisé en ce que** le fichier graphique produit par le second élément de programme est transmis à un pilote d'imprimante, de préférence un pilote d'imprimante matricielle, qui commande l'imprimante (14) pour réaliser des impressions.

31. Système informatique dans lequel est installé un programme informatique utilisable lors de la fabrication d'une série d'impressions en vue de réaliser une série de pièces de tissu (24a ; 24b) imprimées prévues pour un vêtement formé de pièces de tissu (24a ; 24b) cousues ensemble,
le programme informatique en fonctionnement ayant des conséquences sur la circulation de données entre un ordinateur (12) d'un fabricant et un ordinateur (4) d'un client (2) relié à l'ordinateur (12) en vue d'une circulation de données, et sur la commande d'une imprimante (14),
le programme informatique comportant :
(a) un premier élément de programme qui permet au client (2) de fixer le modèle du vêtement voulu par l'intermédiaire de la liaison ordinateur du fabricant (12)-ordinateur du client (4), en fixant en présence de plusieurs paramètres de modèles - par exemple la forme de base, la couleur, la taille - une cible de sélection parmi plusieurs cibles de sélection possibles, le premier élément de programme ayant pour fonction de réunir, en tenant compte des instructions de fixation, un jeu de données qui est représentatif du modèle de vêtement voulu ;
(b) et un second élément de programme qui a pour fonction de produire, en utilisant le jeu de données, un fichier graphique qui est utilisable comme base pour imprimer la série d'impressions sur un support d'impression, celui-ci consistant soit directement en une surface de tissu, soit en un support intermédiaire dont l'impression est transférée ultérieurement sur du tissu,
(c) la série d'impressions couvrant des impressions de dimensions différentes et les impressions ayant chacune, avec ou sans surplus de couture, les dimensions d'une pièce de tissu (24a ; 24b) imprimée pour le montage du vêtement.

32. Système informatique selon la revendication 31, dans lequel le programme informatique installé est **caractérisé en ce que** le premier élément de programme a pour fonction de permettre, en présence d'au moins un paramètre de modèle, de fixer une cible de sélection à l'aide d'une représentation graphique, sur un affichage prévu côté client, de plusieurs cibles de sélection possibles.

33. Système informatique selon la revendication 31 ou 32, dans lequel le programme informatique installé est **caractérisé en ce que** le premier élément de programme a pour fonction de représenter graphiquement un vêtement sur un affichage prévu côté client et, au moins pour une partie des paramètres de modèle, de modifier la représentation graphique conformément aux instructions de fixation.

34. Système informatique selon l'une des revendications 31 à 33, dans lequel le programme informatique installé est **caractérisé en ce que** le premier élément de programme a pour fonction de permettre au client (2) de modifier une fixation de choix déjà faite.

35. Système informatique selon l'une des revendications 31 à 34, dans lequel le programme informatique installé est **caractérisé en ce que** les paramètres de modèle comprennent l'un au moins des paramètres du groupe suivait :
- forme de base - par exemple rayures verticales, rayures horizontales, limite courbe entre des surfaces de couleur ;
- longueur des bras/longueur des jambes/longueur totale ;
- coupe - par exemple cintrée, homme, femme ;
- forme de l'encolure ;
- type de col ;
- poignets oui/non ;
- couleur ;
- plusieurs couleurs différentes ;
- objet écrit ;
- positionnement de l'objet écrit ;
- type de caractère de l'objet écrit ;
- logo ;
- positionnement du logo ;
- taille du vêtement ;
- qualité du tissu.

36. Système informatique selon la revendication 35, dans lequel le programme informatique installé est **caractérisé en ce que** les paramètres de modèle comprennent au moins les paramètres suivants :
- forme de base ;
- plusieurs couleurs différentes ;
- taille du vêtement.

37. Système informatique selon l'une des revendications 31 à 36, dans lequel le programme informatique installé est **caractérisé en ce que** le premier élément de programme pour fabriquer une quantité de vêtements qui vont ensemble présente les fonctions suivantes :
- il existe au moins un paramètre de modèle d'une première sorte présentant la même fixation de cible de sélection pour toute cette quantité de vêtement, que l'on appelle paramètre de quantité ;
- il existe au moins un paramètre de modèle d'une seconde sorte avec une fixation de cible de fixation différente pour la quantité de vêtements, que l'on appelle paramètre d'exemplaires ;
- la fixation de cible de sélection pour le ou les paramètres de quantité et la fixation de cible de sélection pour le ou les paramètres d'exemplaires se font l'une après l'autre ;
- et en réunissant la fixation de cible de sélection pour au moins un paramètre de quantité et la fixation de cible de sélection pour au moins un paramètre d'exemplaires, on constitue pour chaque vêtement de la quantité de vêtements le jeu de données correspondant.

38. Système informatique selon l'une des revendications 31 à 37, dans lequel le programme informatique installé est **caractérisé en ce que** le second élément de programme coopère avec une mémoire de données dans laquelle sont stockés plusieurs fichiers graphiques de sortie pour les impressions du vêtement à fabriquer, à savoir les fichiers graphiques de sortie pour toutes les cibles de sélection au moins en ce qui concerne un paramètre de modèle ;
et **en ce que** le second élément de programme a pour fonction d'extraire un fichier graphique de sortie en fonction du jeu de données et de le modifier quart à la fixation de cible de sélection d'autres paramètres de modèle.

39. Système informatique selon l'une des revendications 31 à 38, dans lequel le programme informatique installé est **caractérisé en ce que** le second programme a pour fonction de tenir compte de l'aspect de la disposition peu encombrante des impressions sur le support d'impression.

40. Système informatique selon l'une des revendications 31 à 39, dans lequel le programme informatique installé est **caractérisé en ce que** le fichier graphique produit par le second élément de programme est transmis à un pilote d'imprimante, de préférence un pilote d'imprimante matricielle, qui commande une imprimante pour réaliser des impressions.
